(19) Europäisches Patentamt
European Patent Office
Office européen des brevets

(11) **EP 0 978 795 A2**

(12) **EUROPEAN PATENT APPLICATION**

(43) Date of publication:
**09.02.2000 Bulletin 2000/06**

(51) Int Cl.[7]: **G06F 17/60**

(21) Application number: **99306036.7**

(22) Date of filing: **29.07.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **04.08.1998 GB 9816959**

(71) Applicant: **J&H Marsh & McLennan Ltd.**
**London EC3N 4DJ (GB)**

(72) Inventor: **Corcoran, Peter John**
**Worthing, West Sussex BN13 1HP (GB)**

(74) Representative: **Smith, Norman Ian et al**
**fJ CLEVELAND**
**40-43 Chancery Lane**
**London WC2A 1JQ (GB)**

(54) **Evaluation of optimum risk financing for risk associated contingencies**

(57) A method of evaluating optimum risk financing for risk associated contingencies. The method assembles input data relating to the contingency and processes that data to calculate by actuarial processing for any value of retained risk, a value of premium, retained risk cost and aggregate stop. The method then identifies the optimum set of values.

SMART FINANCIAL MODELLING SYSTEM

**Fig.1**

DATA INPUT
loss and exposure data is entered into the system

STRATIFICATION
defines the value of losses in any range from 1 to infinity

TRIANGULATION
defines the trended, developed and discounted value of the long term exposures

AGGREGATE STOP
defines the value of the aggregation of losses within the per occurrence range and the value of the retained risk within the per occurrence retention

OPTIONS
defines the premium in relation to any level of risk - from zero to infinity

PRODUCT
the premium, retained risk cost and aggregate stop for any level of retention are established

PRIORITISATION
in order to define the optimum risk cost, the system prioritises each of the several thousand options it has generated; it values each of the options - being the sum of retained risk and the premium it has generated (the cost) - and compares each to the current basis to establish the optimum
it then restates the optimum for each class being reviewed in a separate part of the system the process then seeks to maximise the potential for the cross subsidisation between each class to establish the optimum programme
The process incorporates a weighting to ensure a true prioritisation
(otherwise the mathematical product may be the same solution for a range of options)

MODELLING
the product can then be modelled in relation to any factor affecting the risk cost loss ratio, levels of severity, degrees of variance and interest rates are varied to blend and model the programme

## Description

This invention relates to the evaluation of optimum risk financing for risk associated contingencies.

Many organisations operate in situations where they have an exposure to risk which can result in a financial loss.. These can include injury to employees or third parties, damage to own property or third party, interruptions to the business. It is common practice to insure against such contingencies and in financing the contingencies there is generally a mixture of retained risk and insured risk for which a premium has to be paid. Traditionally, the particular balance between retained and insured risk has been evaluated as a result of statistical analysis and judgement.

Also associated with the financing of such risks is a factor known as aggregate stop which is the value of retained losses within the retention per occurrence. It represents a finite limit to retained losses in any financial period.

The present invention is concerned with a technique for evaluating optimum risk financing, that is to say values for retained risk, insured risk and aggregate stop for any risk associated contingency.

According to the present invention there is provided a method of evaluating optimum risk financing for risk associated contingencies comprising assembling input data relating to the contingency, processing said data to calculate actuarially for any value of retained risk, a value of premium, retained risk cost and aggregate stop, and identifying from the calculated values the optimum set of values.

The calculation can be performed for one or more classes of contingency. When the calculation is made for more than one class, results can be provided on a class by class basis or in combined form. The assembly of the input data includes actuarial development of that data by trending developing and discounting it to reflect the long-term nature of contingency factors. This is a recognised actuarial procedure and will be understood by those skilled in the art.

A critical step in the present method is the step of performing calculations for each of a range of values of retained risk and obtaining from those calculated values the optimum figures. This is considered to represent a significant advance in this art.

The invention will be described now by way of example only, with particular reference to the accompanying drawings. In the drawings:

Figure 1 is a flowchart illustrating the critical steps in the present method; and
Figures 2 to 7 illustrate an example of the present invention.

In essence the method is performed by a computer programme which can run on any modern PC. As can be seen from the figure the initial step in the process is data input (10). This involves inputting data from an organisation whose risk is to be assessed. Such data includes the organisations' exposure base, taking into account the various contingencies to which it is exposed, such as injury to employees or third parties, and property exposure. In addition, the organisations' current insurance programme design is entered and this should include current premium, per occurrence retention and aggregate stop, together with the loss history for each claim of exposure which is trended, developed and discounted by the system.

The next step in the sequence is that shown in the block Stratification (11). This involves defining the value of losses with any range. This is a critical step in the process as it ultimately is required to define premium, retained risk cost and aggregate stop for any level of retained risk over a range which can extend from zero to infinity.

The next step is a triangulation step (12) which defines the trended developed and discounted value of the long-term exposure of the organisation. This is a recognised actuarial process which will not be described further as it will be apparent to those skilled in the art.

The next step is to define the aggregate stop (14) which represents the value of the aggregation of losses within the per occurrence range. Again, this is a recognised concept and technique in actuarial processing.

The next step which lies at the heart of the present technique is identified as an Options step (15). In this step the system takes the aggregate stop and retained risk values at any level of retention per occurrence and calculates a premium which is a function of the difference between the total risk cost and the retained risk cost in relation to selected loss ratio. These calculations are performed using known actuarial techniques. In this way the system defines the required level of premium for any level of retention within a range which can extend from zero to infinity. The result of this step is identified on the figure as a product (16) which constitutes the premium, retained risk cost and aggregates for any level of retention within the defined range.

The next step (17) is to prioritise these values in order to define the optimum risk cost. That is to say the system prioritises each of the many thousand options it has calculated. In carrying out this step it values each of the options which are the sum of the retained risk and the premium it has generated (the risk cost) and compares each to the current basis to establish the optimum. It then restates the optimum for each class being reviewed in a separate part of the system. The process then identifies ways in which cross-subsidisation can be achieved between the various classes to establish an optimum programme covering all classes. This process incorporates a weighting to ensure a true prioritisation since otherwise the mathematical product maybe the same solution for a range of options.

Finally it is possible to model (18) the data from the prioritisations step in order to take into account interest rates, loss ratio and degrees of variance which reflect the extent to which loss projections become increasingly volatile as levels of retention are increased in relation to the severity distribution of an organisation's loss history.

The resulting data can be presented in tabular form, either on a visual display unit or as print out. Also, it can be presented in graphical form in a similar manner.

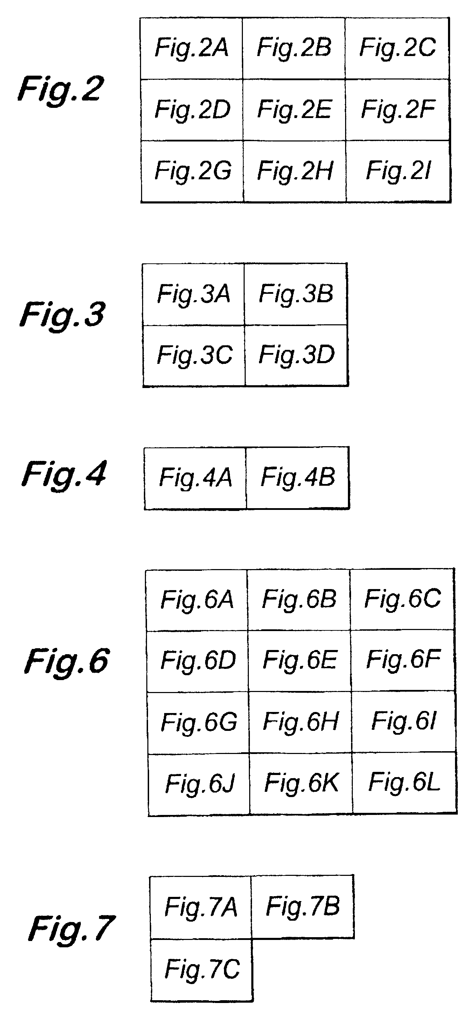

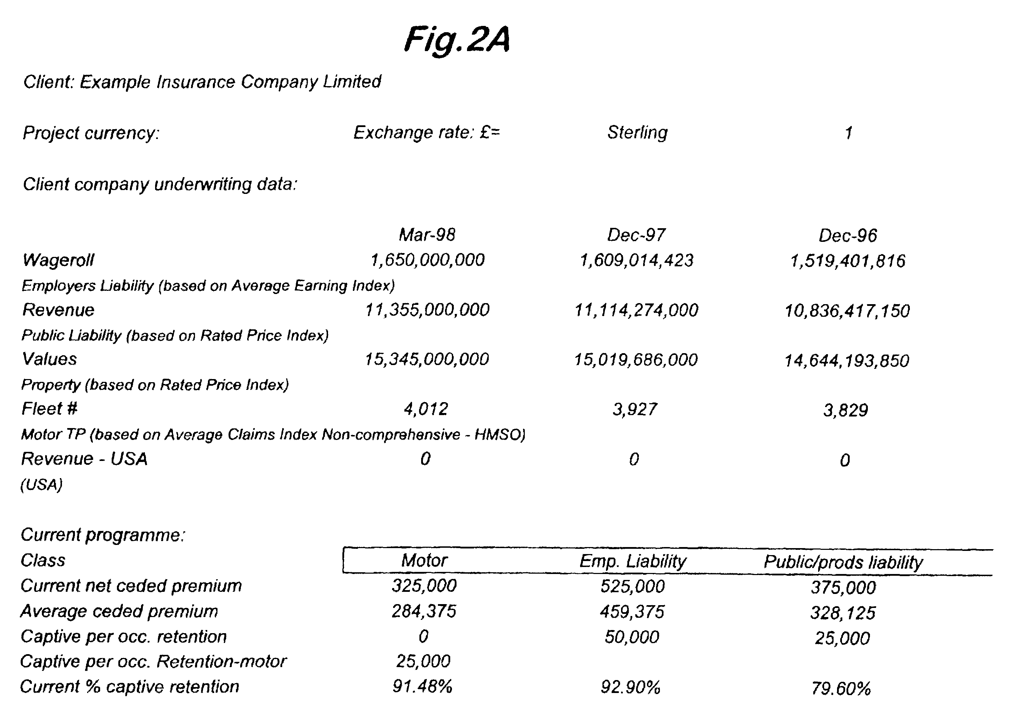

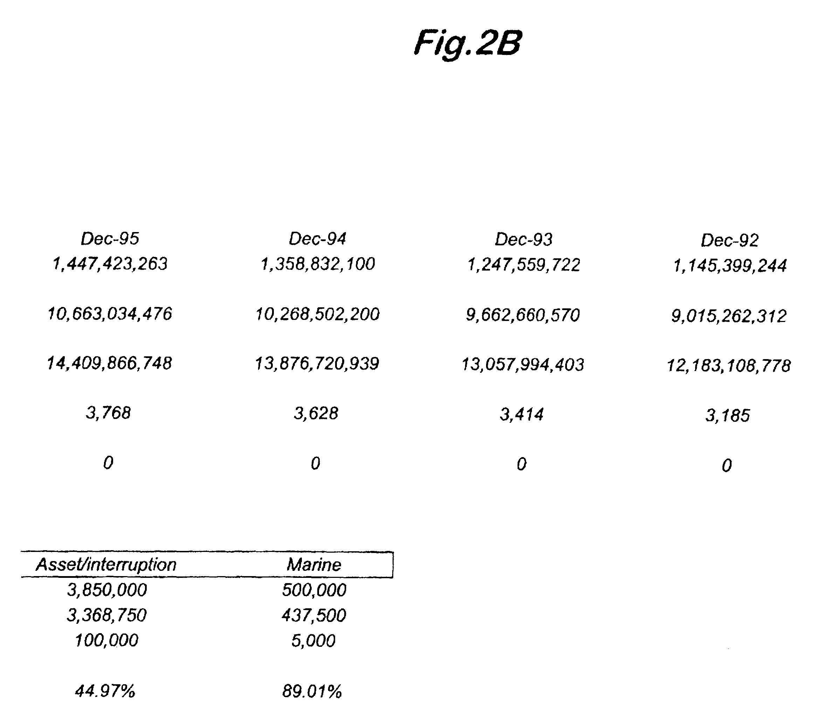

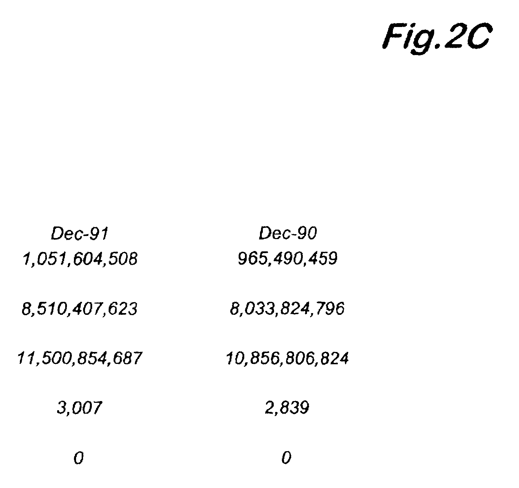

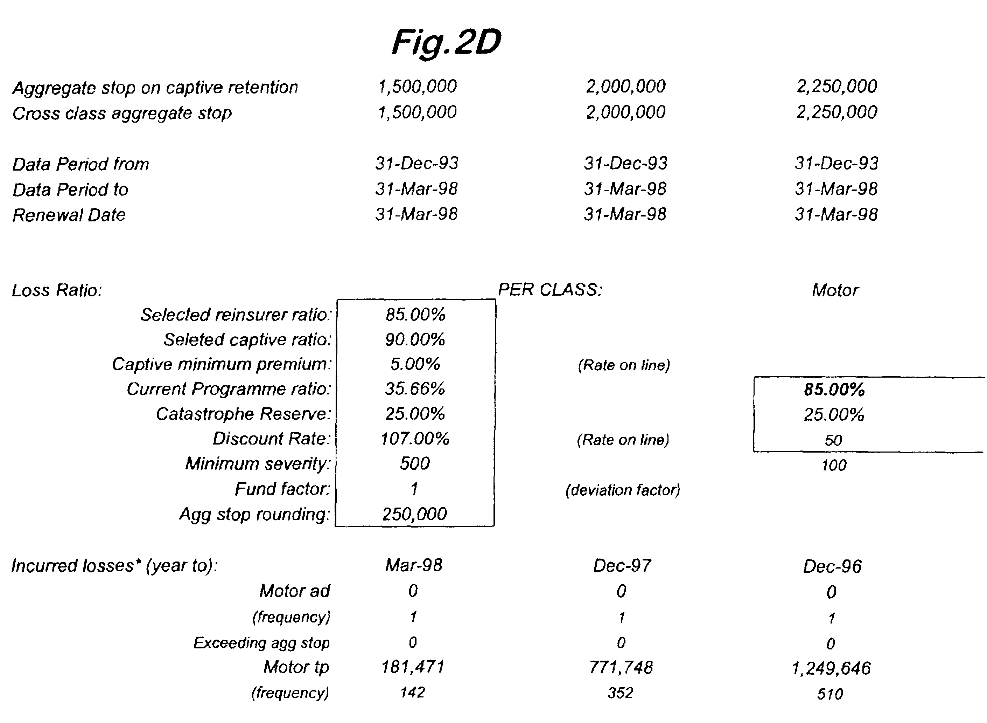

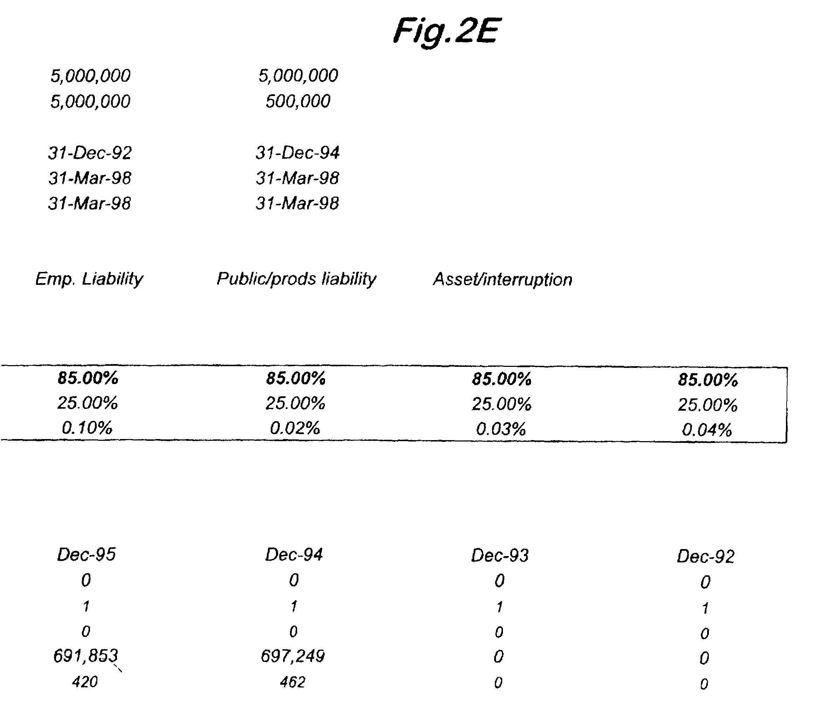

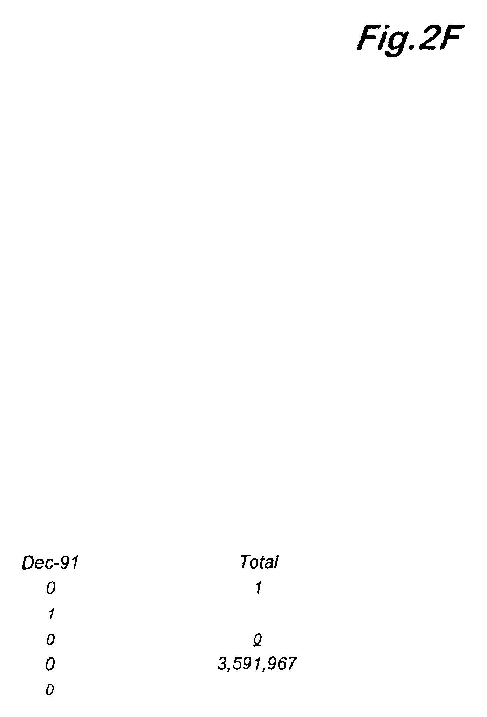

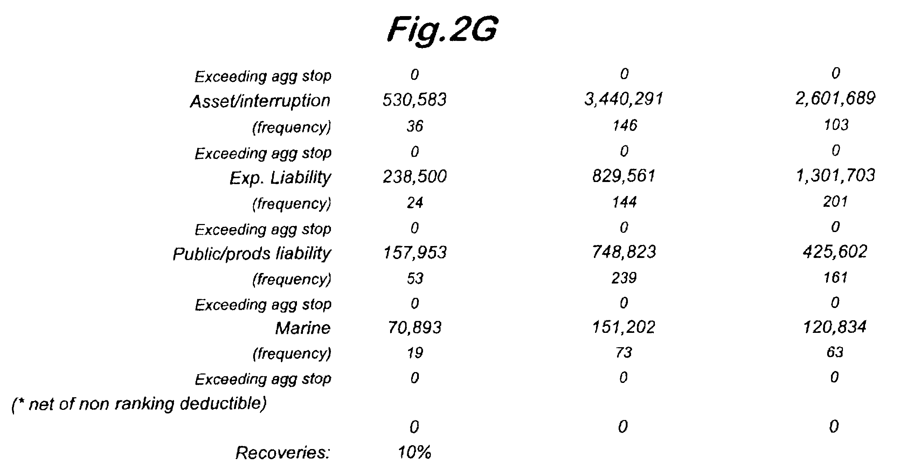

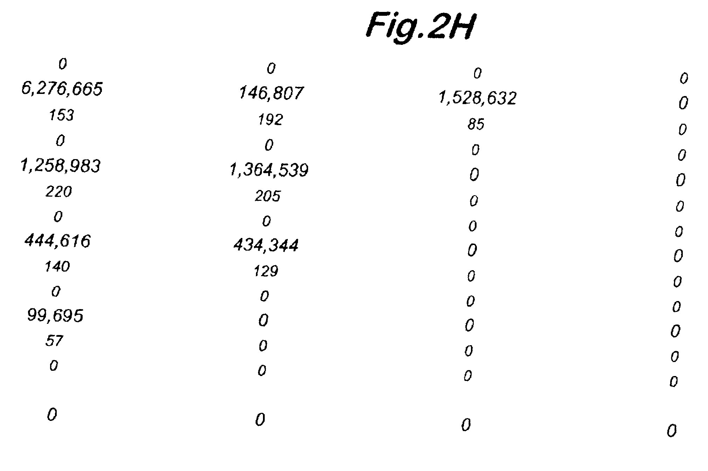

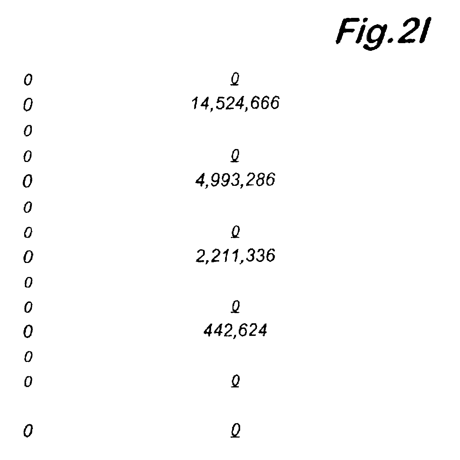

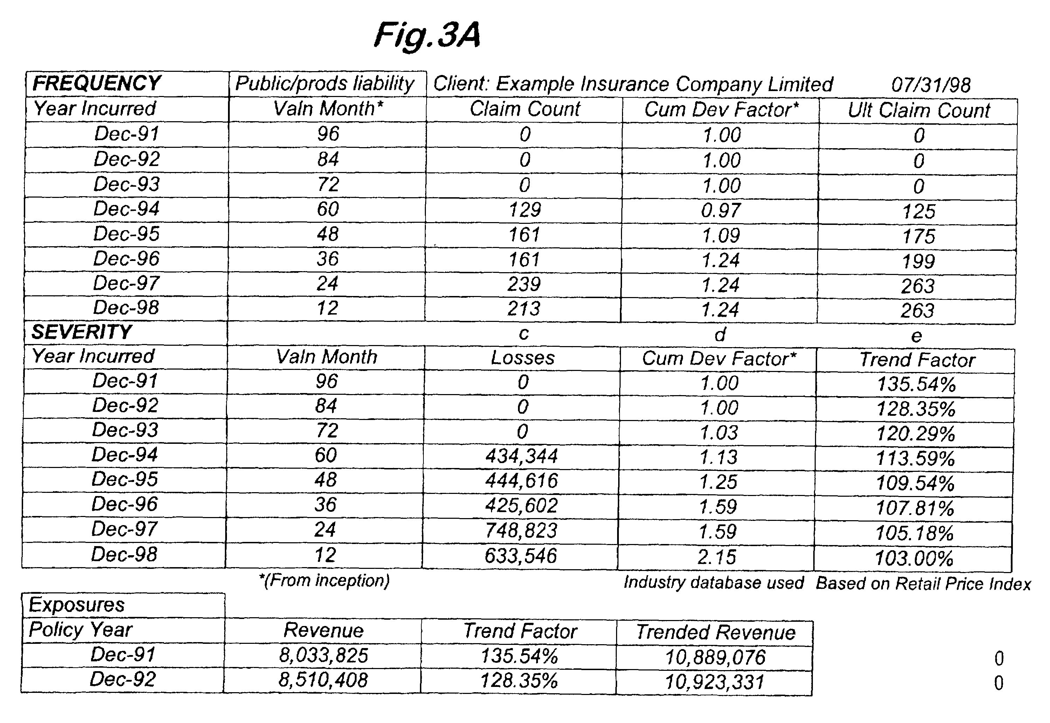

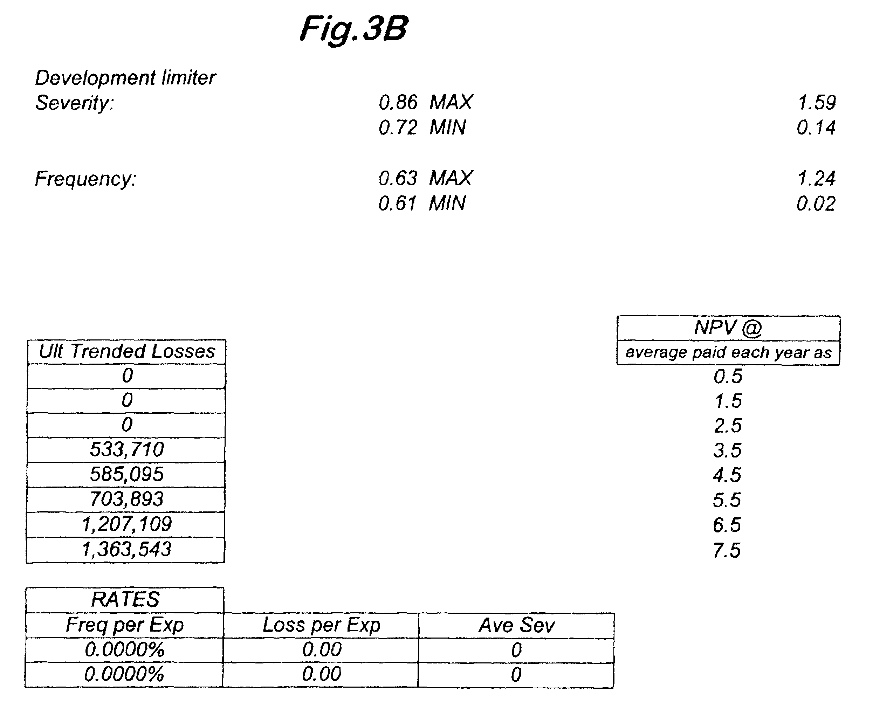

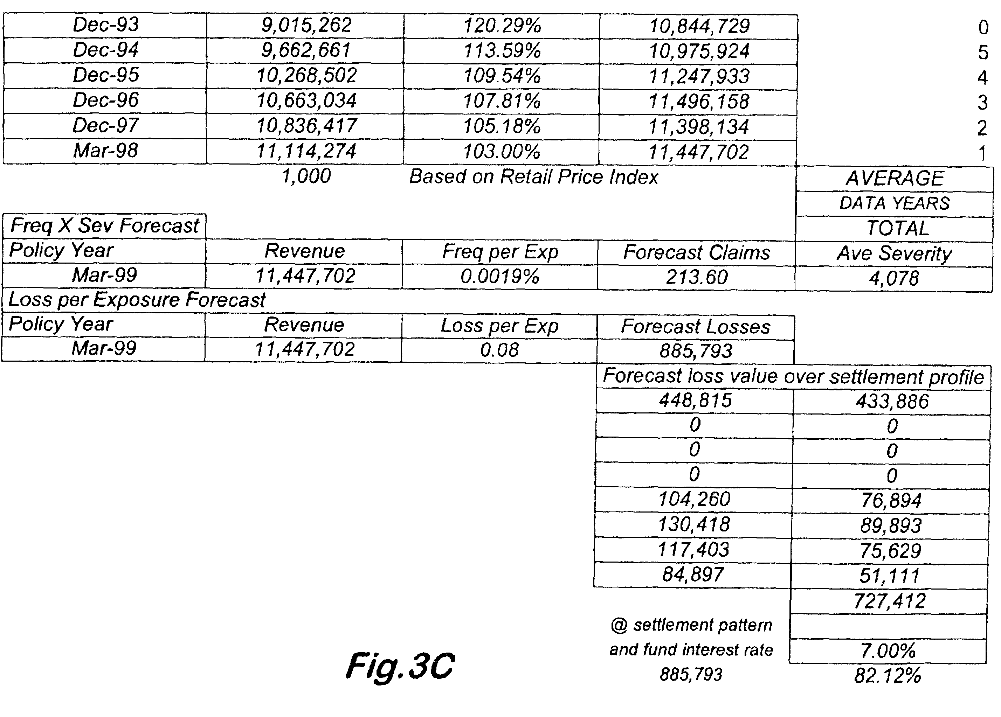

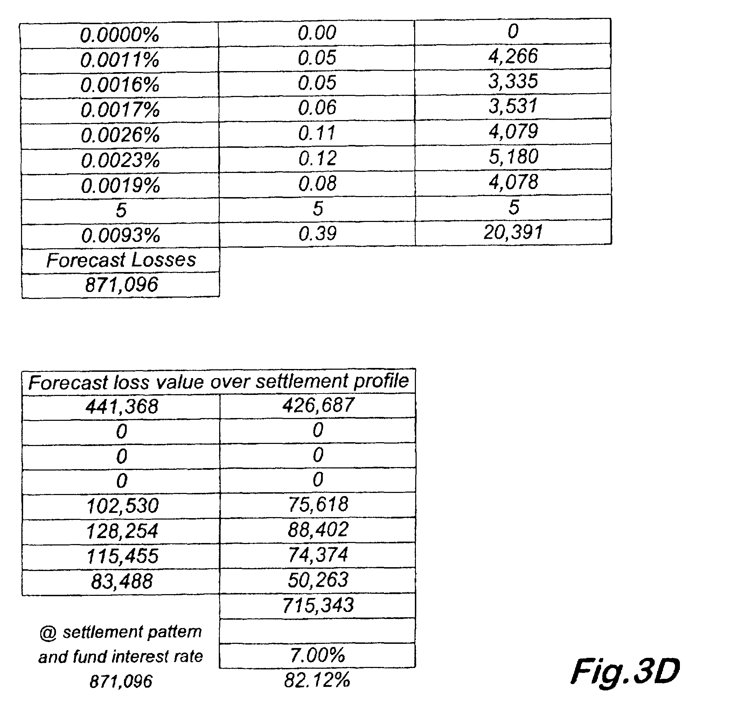

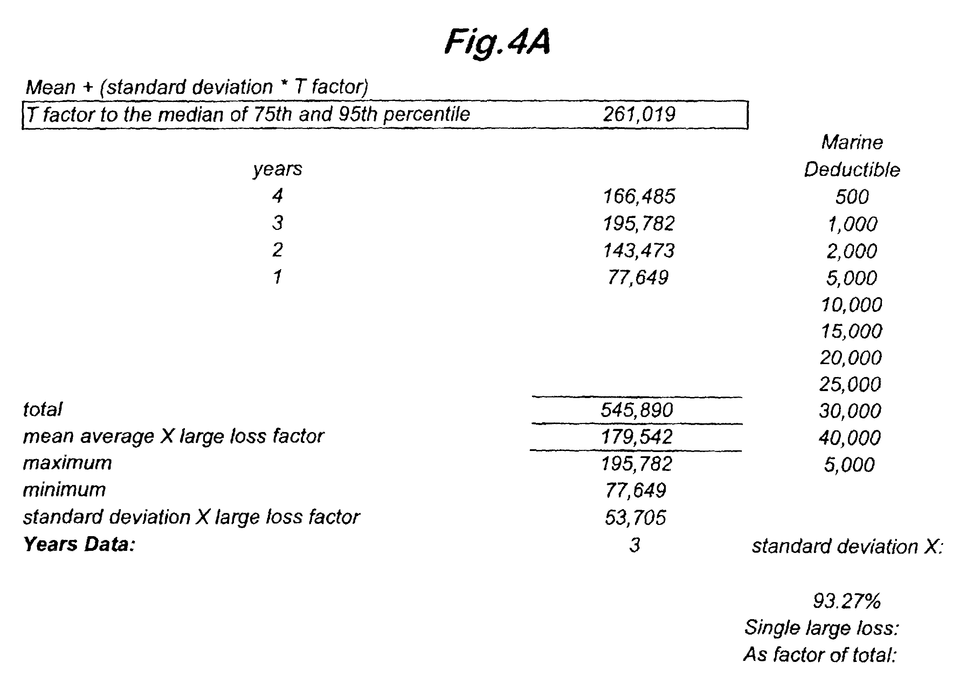

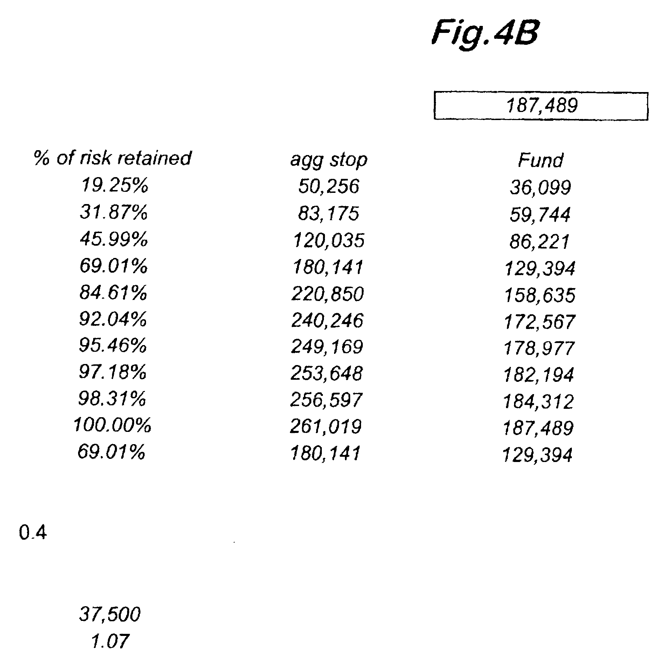

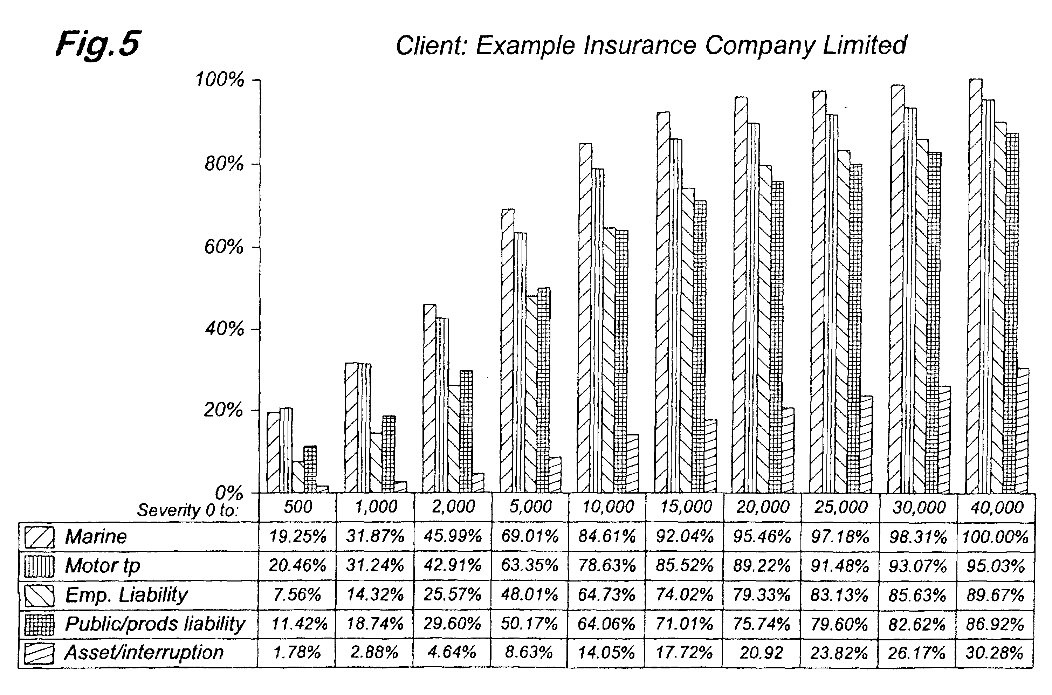

The following example illustrates the principles underlying the present invention. This example will be described with reference to Figures 2 to 7. This example concerns a Client which is a manufacturer with a turnover of £11,355,000,000, a wage roll of £1,650,000,000 and a vehicle fleet of 4012. Its assets and Interruption exposure value is £15,345,000,000.

The Clients existing insurance is

a) Motor insurance is third party only with a deductible of £25,000 per occurrence and £1,500,000 in the annual aggregate; the premium is £325,000.
b) Employers liability cover is subject to a deductible of £50,000 per occurrence, £2,000,000 in the annual aggregate; the premium is £525,000.
c) Public and Product liability is subject to £25,000 per occurrence and £2,250,000 aggregate; the premium is £375,000.
d) Asset/Interruption has a per occurrence deductible of £100,000 and the aggregate stop is £5,000,000; the premium is £3,850,000.
e) Marine liability is subject to £5,000 per occurrence and £500,000 in the aggregate; the premium is £500,000.

Starting from this program the present system can analyse the current programme and define an optimum blend of insured and retained risk.

The method is as follows:

In order to establish the optimum programme to finance these exposures it is necessary to define:

- the premium
- the retained risk cost
- the aggregate stop

for each class evaluated and for the whole programme from a per occurrence at zero to a per occurrence where cost benefit is neutral or negative.

The Clients claims history is then loaded into the system. The system automatically adjusts this to allow for incurred but not reported losses (IBNR) and to annualise the data periods.

The data is developed by conventional actuarial techniques to reflect these factors and changes in reserves and payments over the period between notification and settlement. The system then produces a forecast for the next year which is discounted to allow for the cash flow advantage inherent in the long tail exposures.

In the present example, the Clients data period reviewed is December 31, 1993 to March 31, 1998 except for property (1992), and Marine (1994).

Figure 2 shows the data loaded and defines the ratio of trended, developed and discounted losses to premiums over the data period and the percentage of each exposure retained by the Client. For example, it can be seen that for this case the loss ratio on the motor exposure is 32.8% and the Client retained 91.48% of the loss value.

Figure 3 illustrates the loss forecast function in the system. The example shown in Figure 3 is for public/products liability - but the analysis is simultaneously produced for each of the "tail" exposures. For this class the forecast for the next financial period is in the range of £727,412 to £715,343. These figures are evaluated using known techniques.

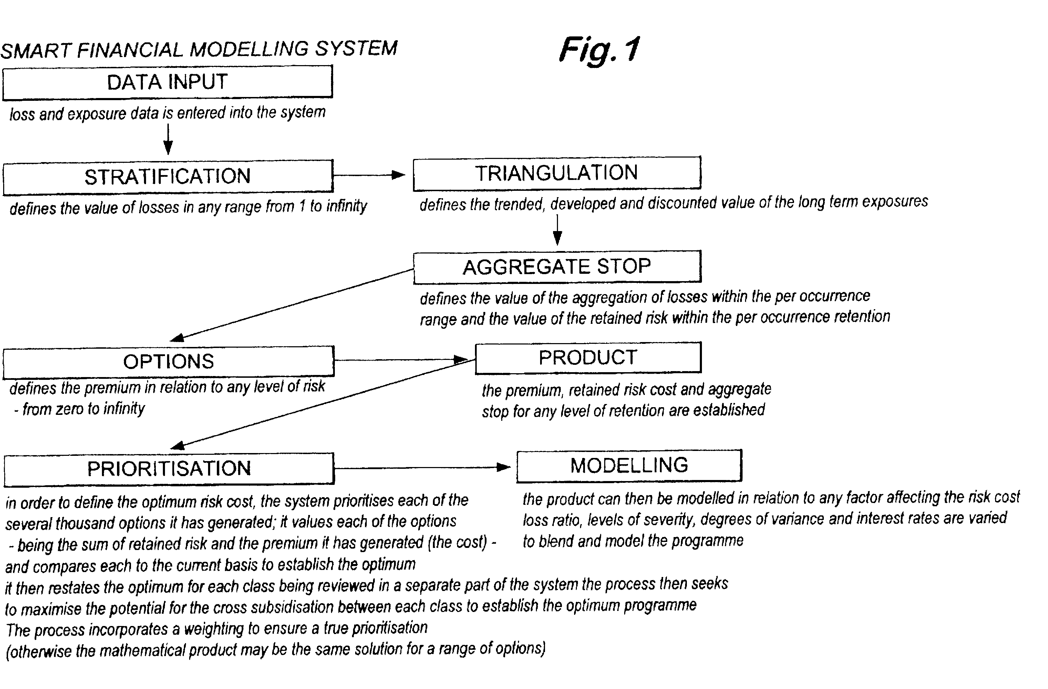

Figure 4 illustrates the process of valuing the losses for each class in bands, ("stratification" 11 in Figure 1), as the system has to define the loss cost, premium and aggregate stop at any level of per occurrence deductible for each class. Figure 4 shows figures for Marine but corresponding figures are produced for the other exposures.

The system then establishes the aggregate stop and cost of retained risk for any level of per occurrence retention for each class. Figure 4 and Figure 5 illustrate this process and it can be seen that for the marine exposure at £500 per occurrence, the aggregate stop is £50,256, retained risk cost is £36,099; and the client retains 19•25% of the exposure; at £25,000 per occurrence, the Client would retain 97•18% of the exposure, the aggregate stop is £253,648 and retained risk projection is £182,194.

The system now contains the building blocks for defining the optimum programme. The next step is to establish the premium at any level of per occurrence retention per class and to prioritise. In this context, the sum of retained risk and premium, (the risk cost), is the criteria of prioritising.

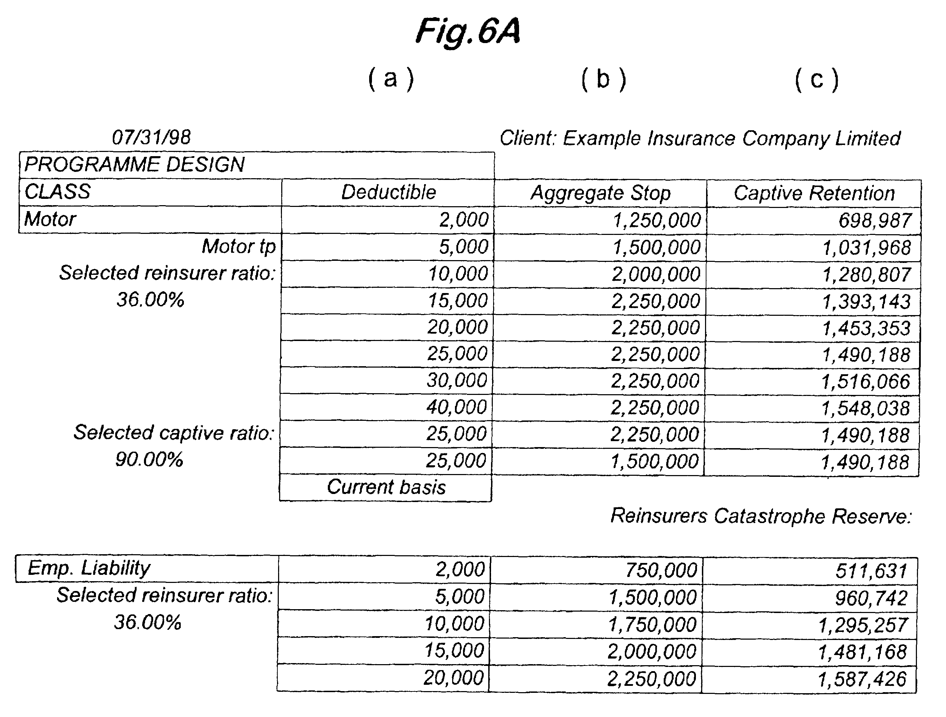

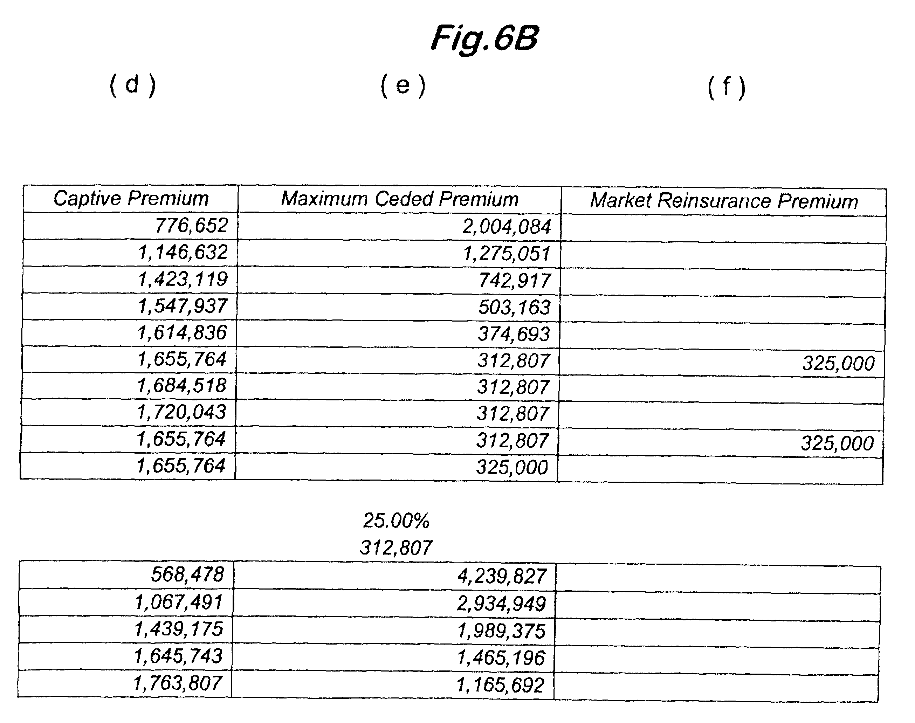

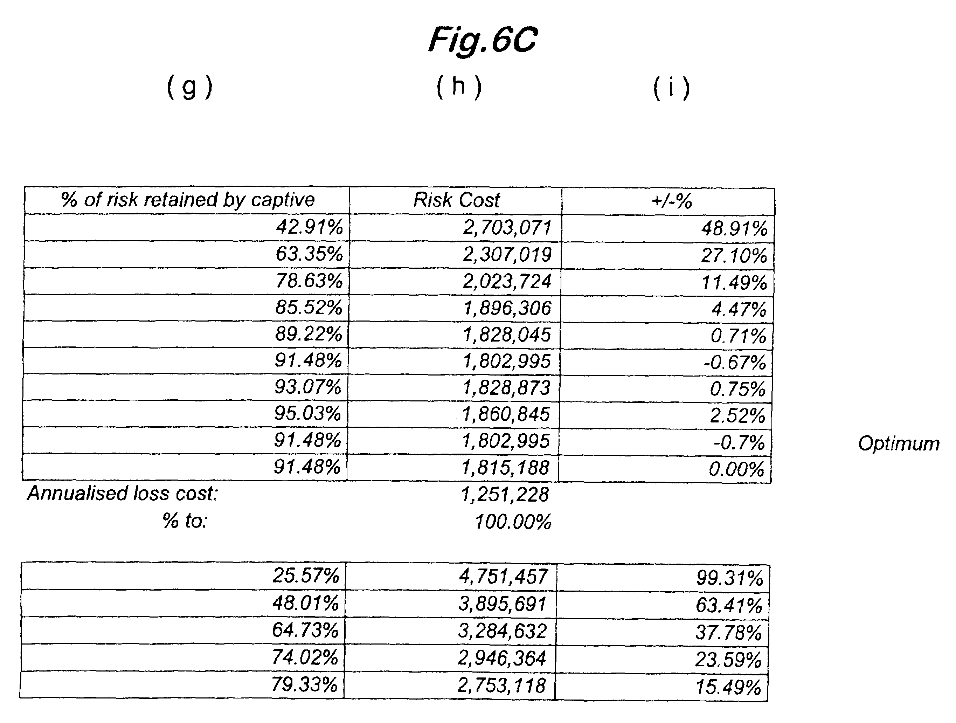

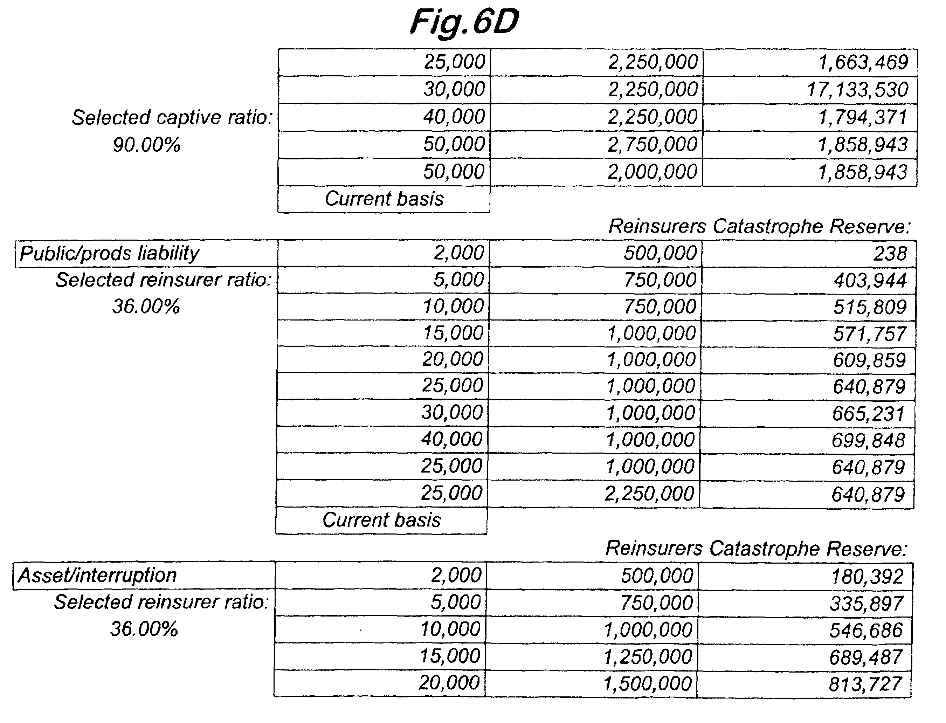

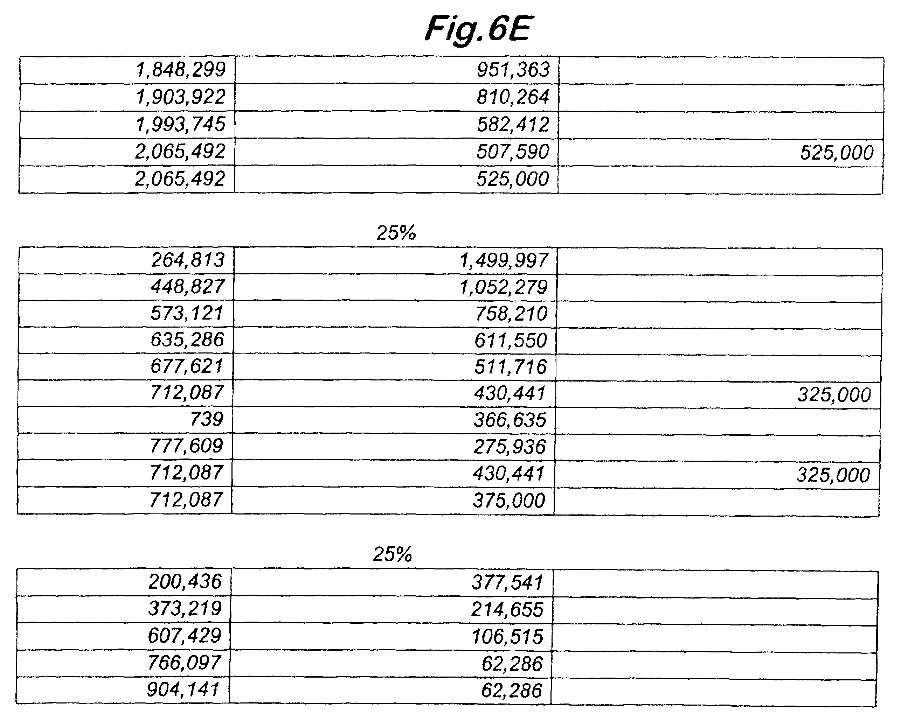

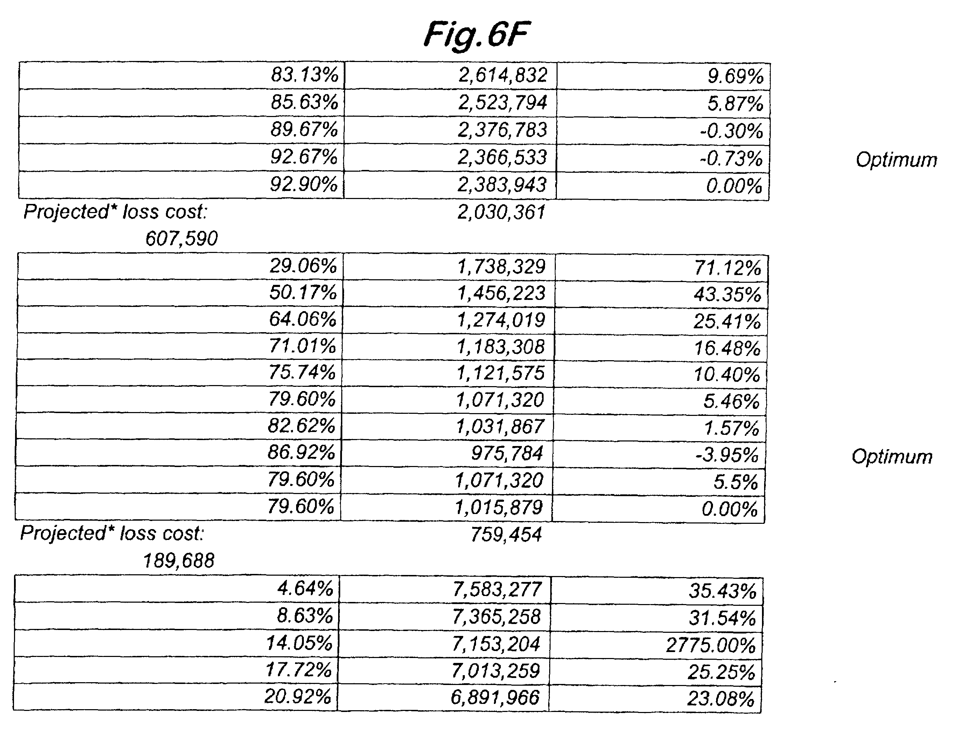

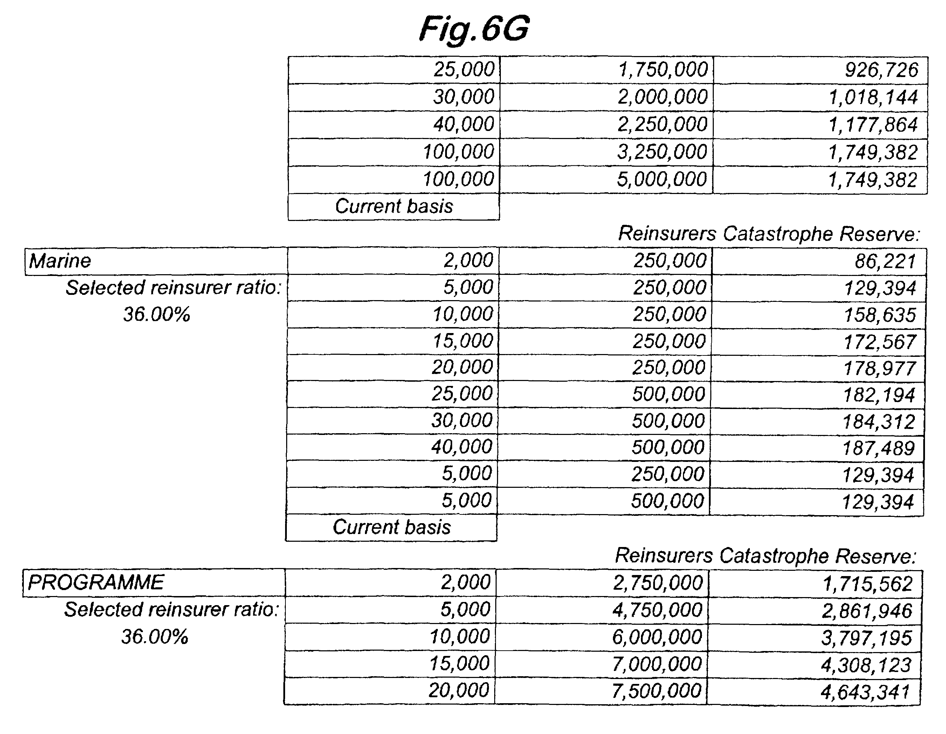

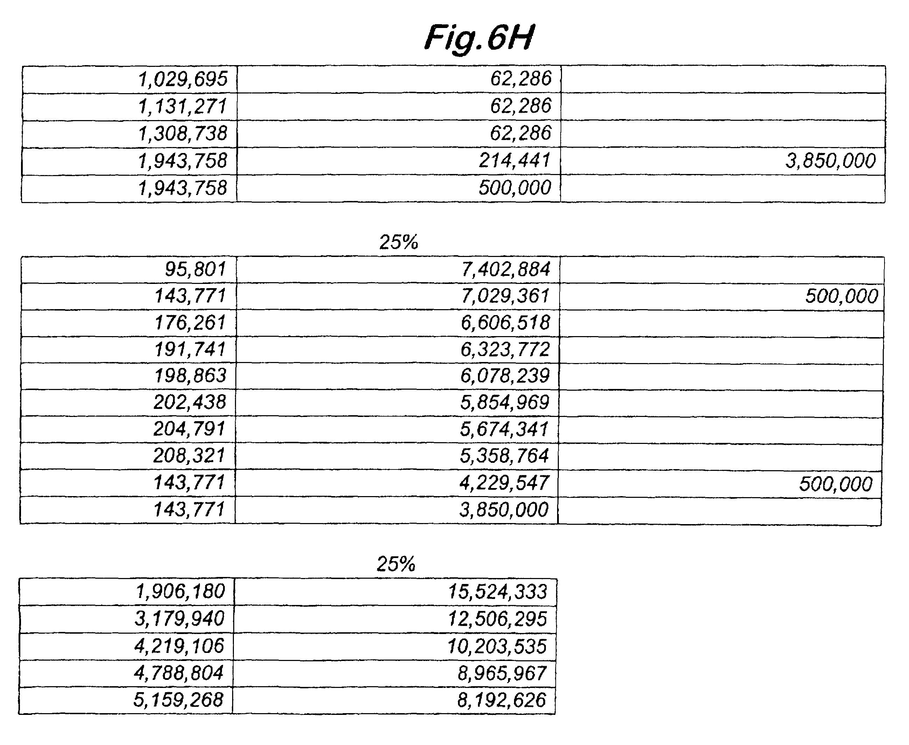

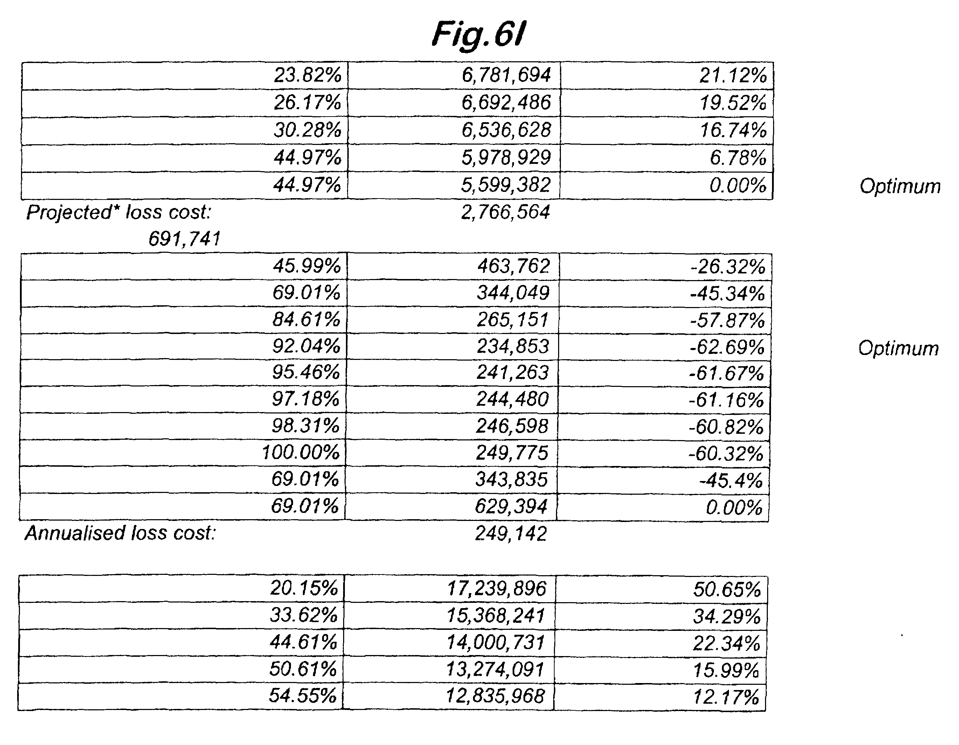

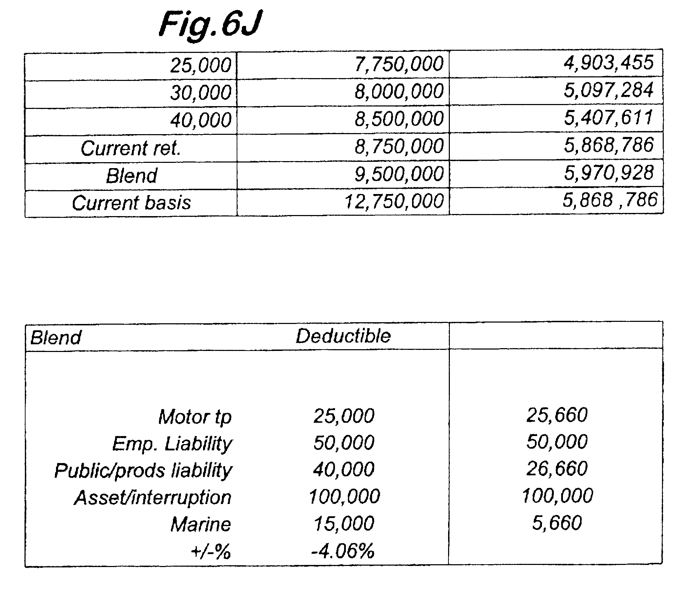

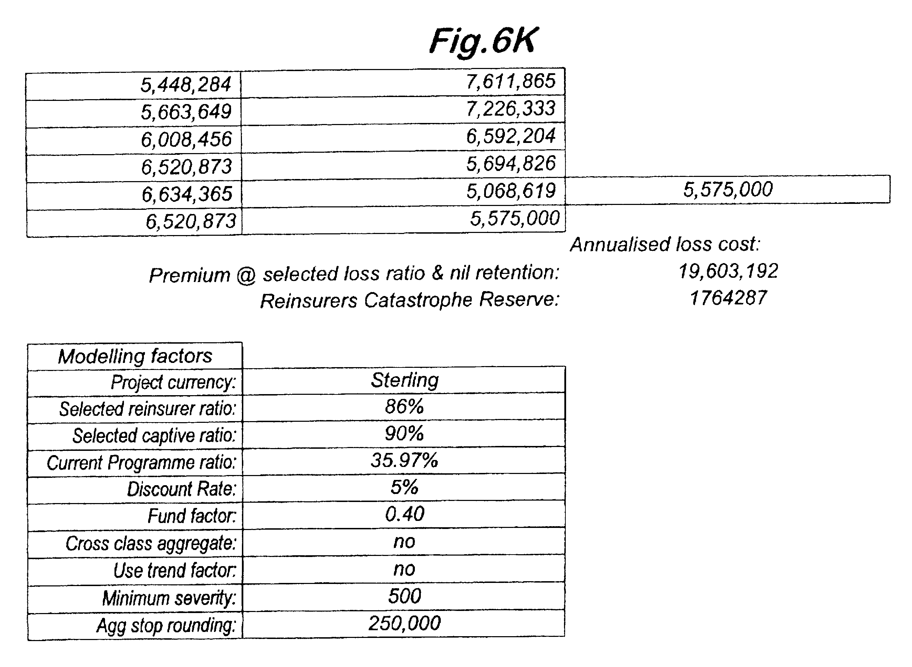

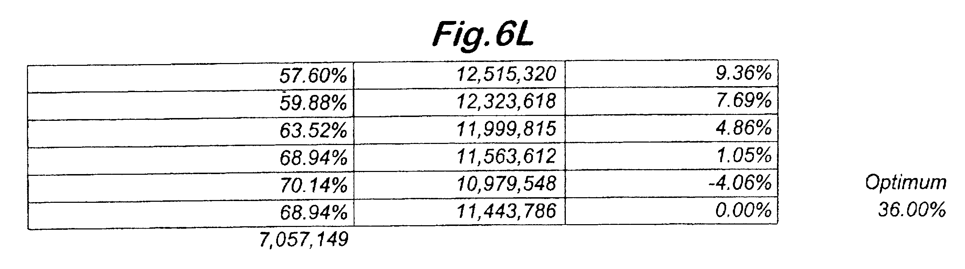

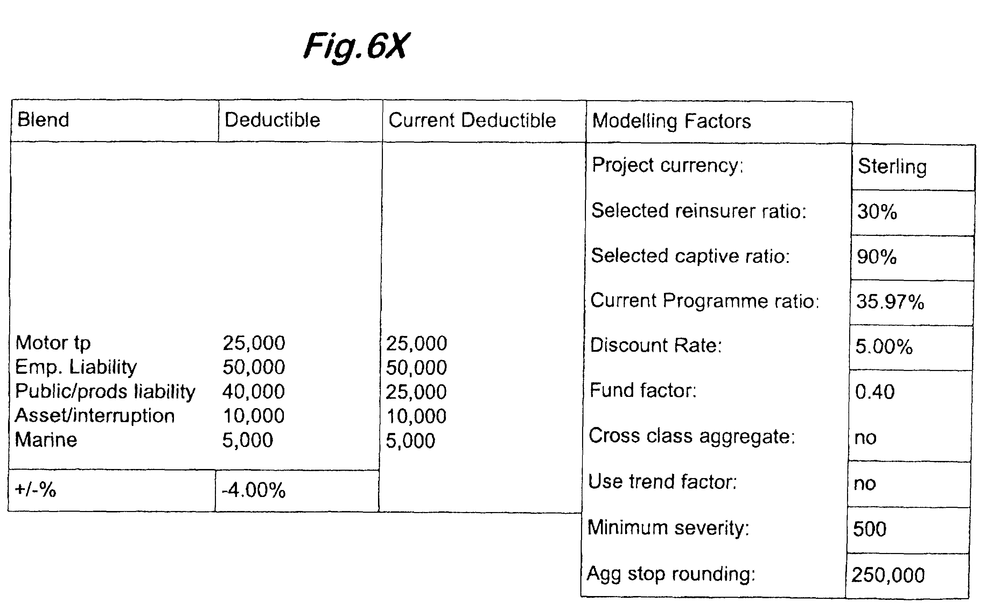

Figure 6 illustrates prioritisation for each class across a range of per occurrence retentions.

In this example, the system has been run at current loss ratios, 5% interest/discount rate and a standard deviation factor at 0.4. It has defined a reduction in risk cost of 5.06% and the aggregate stop is at £9,500,000 from the existing £12, 750,000.

In this Figure for each class of insurance the figures in column (a) are per occurrence deductible, those in column (b) aggregate stop, those in column (c) the retained risk cost, those in column (d) the captive insurer premium, those in column (e) the maximum ceded premium, those in column (g) the percentage of risk retained by client, those in column (h) the risk cost (being the sum of retained risk and premium to the insurers), and those in column (j) are the comparison of the risk cost generated by this process and the current cost.

The figures in columns (a) to (g) have been developed earlier. The figures in column (h) are obtained for each line according to the formula

$$h = c + e$$

The figures in column (i) are the percentage change in risk cost for each line. it will be seen that in Figure 6 the optimum set of parameters for each class of insurance is marked.

The figures shown in Figure 6 are for one set of variables. The system then effectively repeats this process for an infinite number of permutations or combinations of variables and the most effective configuration is identified.

Thus it will be seen that the first part of the uniqueness of the process is that it draws together the exposure classes into a manageable form. At this stage the system defines the actuarial optimum per line - or class - and then restates each optimum as the programme design.

At this stage of the process the system is defining a fixed outcome in relation to the defined variables - each of which will generate an infinite number of outcomes. The second part of the uniqueness of the process is that it now restates the prioritised optimum - per line or class and for the whole programme - each time the variables are changed.

Ultimately, the variables are scrolled - so that prioritisation becomes dynamic and the effects can be seen immediately as the configurations are restated.

An infinite number of permutations - or combinations of variable - can be generated in this way, and the most effective configuration can be established.

The final part of the process models the programme defined in the preceding sections in relation to the following variables:

> interest rates
> loss ratio
> levels of per occurrence retention from zero to a level at which the cost benefit is neutral or negative.
> Degrees of variance, i.e. the multiples of standard deviation to reflect the distribution of loss values. A standard deviation coefficient of 2 - assuming a normal loss distribution - would mean that 95% of losses would be within the forecast.

The process then carries out curve fitting to ensure a reasonable match in the loss distribution. Monte Carlo simulations are run to test the efficacy of the loss projections in the process.

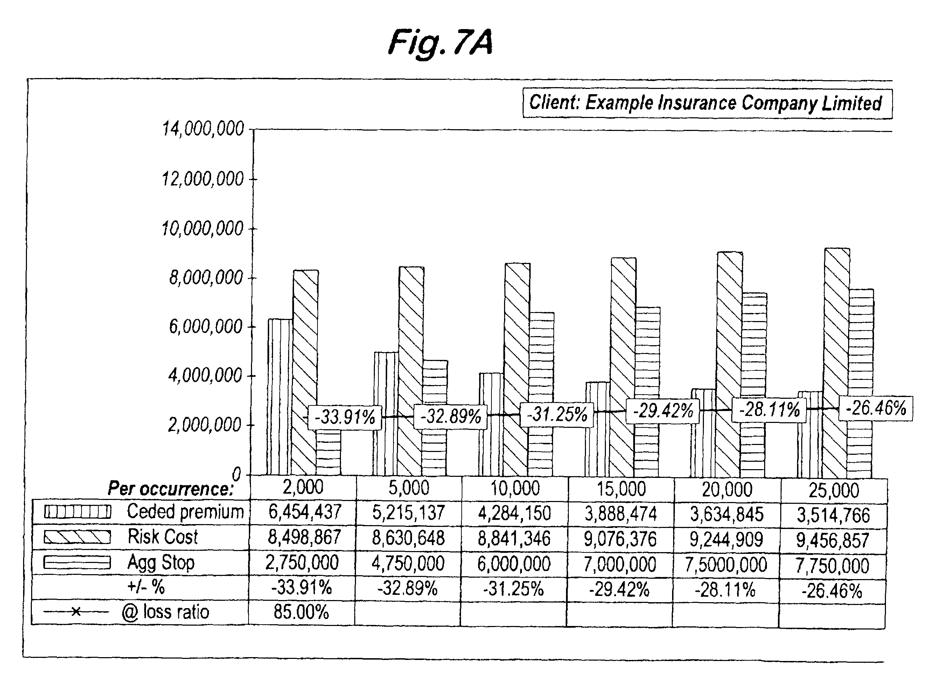

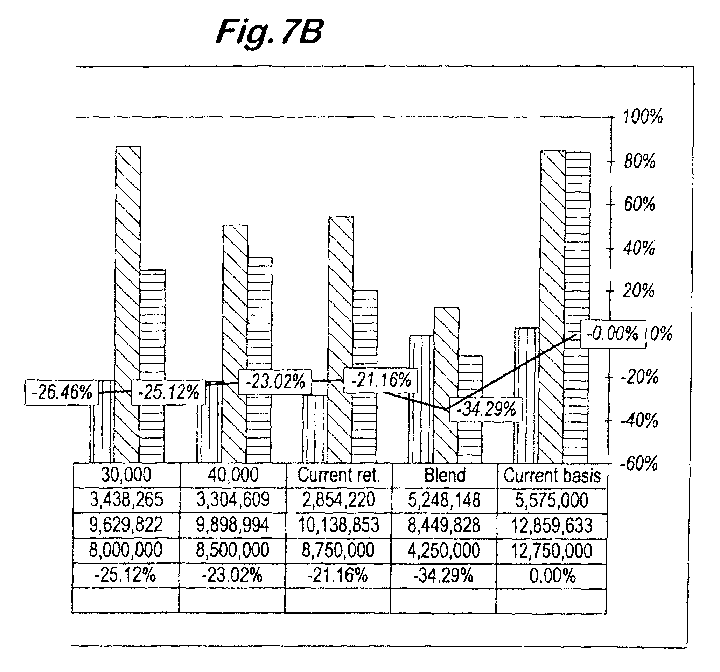

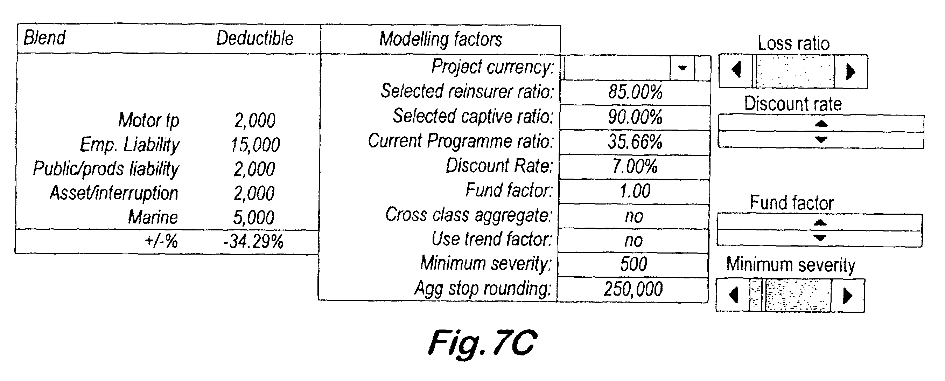

Figure 7 illustrates the modelled programme, using an interest/discount rate at 7%, a loss ratio at 85% and a standard deviation factor at 1.

This modelling and prioritising process is unique in defining the optimum risk financing programme and enables Clients and insurers to agree a medium to long term strategy for financing risk - which can be reviewed as circumstance changes. For example, as the insurance market cycle influences the loss ratio, interest rates change, new losses are notified or the Client acquires or disposes of companies.

The end product in this example is a reduction in direct risk cost of - 34.29% and an aggregate stop at £4.25m, (from £12.75m); the Client's premium becomes £5,248,148, (from £5,575,000) and retained risk is £3,201,679, (from (£7,284,633).

The following are definitives of terms used in this description:

> LOSS RATIO: the ratio of losses to premiums over the data period
> DEDUCTIBLE: (also referred to as the per occurrence retention); the retained amount per loss
> AGGREGATE STOP: the sum of losses within the per occurrence retentions during any one insurance or fiscal period
> RETENTION: the sum losses within the deductible and aggregate stop in any one insurance or fiscal period
> DATA PERIOD: the frame of loss and premium history being evaluated FREQUENCY: the number of losses
> SEVERITY: the value of losses
> IBNR: (incurred but not reported); losses which have yet to be notified
> RUN OFF: the period between occurrence and settlement of the loss
> TRIANGULATION: monitors the movement of IBNR and run off to ultimate settlement to produce a forecast of the expected loss value and a settlement profile which defines the NPV
> NPV: the net present value of the expected losses - at a selected discount rate - in relation to the settlement profile of the exposure.

**Claims**

1. A method of evaluating optimum risk financing for risk associated contingencies comprising assembling input data relating to the contingency, processing said data to calculate by actuarial processing, for any value of retained risk, a value of premium, retained risk cost and aggregate stop, and identifying from the calculated values the optimum set of values.

2. A method according to claim 1, wherein the calculation is modelled and prioritised for a plurality of variables.

3. A method according to claim 1 or claim 2, wherein the calculation is performed for one or more classes of contingency.

4. A method according to claim 3, wherein when the calculation is made for more than one class, results are provided on a class by class basis or in combined form.

5. A method according to claim 1, wherein the assembly of the input data includes actuarial development of that data by trending developing and discounting it to reflect the long-term nature of contingency factors.

6. A system for evaluating optimum risk financing for risk associated contingencies, said system being arranged to assemble input data relating to the contingency, to process said data to calculate by actuarial processing for any value of retained risk, a value of premium, retained risk cost and aggregate stop, and to identify from the calculated values the optimum set of values.

7. A system according to claim 6, wherein the calculation is modelled and prioritised for a plurality of variables.

8. A system according to claim 6, wherein the calculation is performed for one or more classes of contingency.

9. A system according to claim 8, wherein when the calculation is made for more than one class, results are provided on a class by class basis or in combined form.

10. A system according to claim 6, wherein the assembly of the input data includes actuarial development of that data by trending developing and discounting it to reflect the long-term nature of contingency factors.

11. A computer program product comprising a computer readable medium having stored thereon computer program code which when loaded into a computer can execute the method according to claim 1.

## Fig. 1

**SMART FINANCIAL MODELLING SYSTEM**

**DATA INPUT**

*loss and exposure data is entered into the system*

↓

**STRATIFICATION**

*defines the value of losses in any range from 1 to infinity*

↓

**TRIANGULATION**

*defines the trended, developed and discounted value of the long term exposures*

↓

**AGGREGATE STOP**

*defines the value of the aggregation of losses within the per occurrence range and the value of the retained risk within the per occurrence retention*

**OPTIONS**

*defines the premium in relation to any level of risk - from zero to infinity*

**PRODUCT**

*the premium, retained risk cost and aggregate stop for any level of retention are established*

**MODELLING**

*the product can then be modelled in relation to any factor affecting the risk cost loss ratio, levels of severity, degrees of variance and interest rates are varied to blend and model the programme*

**PRIORITISATION**

*in order to define the optimum risk cost, the system prioritises each of the several thousand options it has generated; it values each of the options - being the sum of retained risk and the premium it has generated (the cost) - and compares each to the current basis to establish the optimum*
*it then restates the optimum for each class being reviewed in a separate part of the system the process then seeks to maximise the potential for the cross subsidisation between each class to establish the optimum programme*
*The process incorporates a weighting to ensure a true prioritisation*
*(otherwise the mathematical product may be the same solution for a range of options)*

**Fig.2**

| Fig.2A | Fig.2B | Fig.2C |
|--------|--------|--------|
| Fig.2D | Fig.2E | Fig.2F |
| Fig.2G | Fig.2H | Fig.2I |

**Fig.3**

| Fig.3A | Fig.3B |
|--------|--------|
| Fig.3C | Fig.3D |

**Fig.4**

| Fig.4A | Fig.4B |
|--------|--------|

**Fig.6**

| Fig.6A | Fig.6B | Fig.6C |
|--------|--------|--------|
| Fig.6D | Fig.6E | Fig.6F |
| Fig.6G | Fig.6H | Fig.6I |
| Fig.6J | Fig.6K | Fig.6L |

**Fig.7**

| Fig.7A | Fig.7B |
|--------|--------|
| Fig.7C |  |

# Fig.2A

*Client: Example Insurance Company Limited*

| *Project currency:* | *Exchange rate: £=* | *Sterling* | *1* |

*Client company underwriting data:*

| | *Mar-98* | *Dec-97* | *Dec-96* |
|---|---|---|---|
| *Wageroll* | *1,650,000,000* | *1,609,014,423* | *1,519,401,816* |
| *Employers Liability (based on Average Earning Index)* | | | |
| *Revenue* | *11,355,000,000* | *11,114,274,000* | *10,836,417,150* |
| *Public Liability (based on Rated Price Index)* | | | |
| *Values* | *15,345,000,000* | *15,019,686,000* | *14,644,193,850* |
| *Property (based on Rated Price Index)* | | | |
| *Fleet #* | *4,012* | *3,927* | *3,829* |
| *Motor TP (based on Average Claims Index Non-comprehensive - HMSO)* | | | |
| *Revenue - USA* | *0* | *0* | *0* |
| *(USA)* | | | |

*Current programme:*

| *Class* | *Motor* | *Emp. Liability* | *Public/prods liability* |
|---|---|---|---|
| *Current net ceded premium* | *325,000* | *525,000* | *375,000* |
| *Average ceded premium* | *284,375* | *459,375* | *328,125* |
| *Captive per occ. retention* | *0* | *50,000* | *25,000* |
| *Captive per occ. Retention-motor* | *25,000* | | |
| *Current % captive retention* | *91.48%* | *92.90%* | *79.60%* |

EP 0 978 795 A2

## Fig.2B

| Dec-95 | Dec-94 | Dec-93 | Dec-92 |
|---|---|---|---|
| 1,447,423,263 | 1,358,832,100 | 1,247,559,722 | 1,145,399,244 |
| 10,663,034,476 | 10,268,502,200 | 9,662,660,570 | 9,015,262,312 |
| 14,409,866,748 | 13,876,720,939 | 13,057,994,403 | 12,183,108,778 |
| 3,768 | 3,628 | 3,414 | 3,185 |
| 0 | 0 | 0 | 0 |

| Asset/interruption | Marine |
|---|---|
| 3,850,000 | 500,000 |
| 3,368,750 | 437,500 |
| 100,000 | 5,000 |
| 44.97% | 89.01% |

# Fig.2C

| Dec-91 | Dec-90 |
|---|---|
| 1,051,604,508 | 965,490,459 |
| 8,510,407,623 | 8,033,824,796 |
| 11,500,854,687 | 10,856,806,824 |
| 3,007 | 2,839 |
| 0 | 0 |

# Fig.2D

| | | | |
|---|---|---|---|
| Aggregate stop on captive retention | 1,500,000 | 2,000,000 | 2,250,000 |
| Cross class aggregate stop | 1,500,000 | 2,000,000 | 2,250,000 |
| | | | |
| Data Period from | 31-Dec-93 | 31-Dec-93 | 31-Dec-93 |
| Data Period to | 31-Mar-98 | 31-Mar-98 | 31-Mar-98 |
| Renewal Date | 31-Mar-98 | 31-Mar-98 | 31-Mar-98 |

Loss Ratio:      PER CLASS:      Motor

| | | | |
|---|---|---|---|
| Selected reinsurer ratio: | 85.00% | | |
| Seleted captive ratio: | 90.00% | | |
| Captive minimum premium: | 5.00% | (Rate on line) | |
| Current Programme ratio: | 35.66% | | 85.00% |
| Catastrophe Reserve: | 25.00% | | 25.00% |
| Discount Rate: | 107.00% | (Rate on line) | 50 |
| Minimum severity: | 500 | | 100 |
| Fund factor: | 1 | (deviation factor) | |
| Agg stop rounding: | 250,000 | | |

| Incurred losses* (year to): | Mar-98 | Dec-97 | Dec-96 |
|---|---|---|---|
| Motor ad | 0 | 0 | 0 |
| (frequency) | 1 | 1 | 1 |
| Exceeding agg stop | 0 | 0 | 0 |
| Motor tp | 181,471 | 771,748 | 1,249,646 |
| (frequency) | 142 | 352 | 510 |

EP 0 978 795 A2

## Fig.2E

5,000,000         5,000,000
5,000,000         500,000

31-Dec-92     31-Dec-94
31-Mar-98     31-Mar-98
31-Mar-98     31-Mar-98

| Emp. Liability | Public/prods liability | Asset/interruption | |
|---|---|---|---|
| **85.00%** | **85.00%** | **85.00%** | **85.00%** |
| 25.00% | 25.00% | 25.00% | 25.00% |
| 0.10% | 0.02% | 0.03% | 0.04% |

| Dec-95 | Dec-94 | Dec-93 | Dec-92 |
|---|---|---|---|
| 0 | 0 | 0 | 0 |
| 1 | 1 | 1 | 1 |
| 0 | 0 | 0 | 0 |
| 691,853 | 697,249 | 0 | 0 |
| 420 | 462 | 0 | 0 |

EP 0 978 795 A2

EP 0 978 795 A2

# Fig.2F

| Dec-91 | Total |
|--------|-------|
| 0 | 1 |
| 1 | |
| 0 | 0 |
| 0 | 3,591,967 |
| 0 | |

# Fig.2G

| | | | |
|---|---|---|---|
| Exceeding agg stop | 0 | 0 | 0 |
| Asset/interruption | 530,583 | 3,440,291 | 2,601,689 |
| (frequency) | 36 | 146 | 103 |
| Exceeding agg stop | 0 | 0 | 0 |
| Exp. Liability | 238,500 | 829,561 | 1,301,703 |
| (frequency) | 24 | 144 | 201 |
| Exceeding agg stop | 0 | 0 | 0 |
| Public/prods liability | 157,953 | 748,823 | 425,602 |
| (frequency) | 53 | 239 | 161 |
| Exceeding agg stop | 0 | 0 | 0 |
| Marine | 70,893 | 151,202 | 120,834 |
| (frequency) | 19 | 73 | 63 |
| Exceeding agg stop | 0 | 0 | 0 |

(* net of non ranking deductible)

| | | | |
|---|---|---|---|
| | 0 | 0 | 0 |
| Recoveries: | 10% | | |

# Fig.2H

| | | | |
|---|---|---|---|
| 0 | 0 | 0 | 0 |
| 6,276,665 | 146,807 | 1,528,632 | 0 |
| 153 | 192 | 85 | 0 |
| 0 | 0 | 0 | 0 |
| 1,258,983 | 1,364,539 | 0 | 0 |
| 220 | 205 | 0 | 0 |
| 0 | 0 | 0 | 0 |
| 444,616 | 434,344 | 0 | 0 |
| 140 | 129 | 0 | 0 |
| 0 | 0 | 0 | 0 |
| 99,695 | 0 | 0 | 0 |
| 57 | 0 | 0 | 0 |
| 0 | 0 | 0 | 0 |
| 0 | 0 | 0 | 0 |

EP 0 978 795 A2

# Fig.2l

|   |   |
|---|---|
| 0 | 0 |
| 0 | 14,524,666 |
| 0 |   |
| 0 | 0 |
| 0 | 4,993,286 |
| 0 |   |
| 0 | 0 |
| 0 | 2,211,336 |
| 0 |   |
| 0 | 0 |
| 0 | 442,624 |
| 0 |   |
| 0 | 0 |
|   |   |
| 0 | 0 |

EP 0 978 795 A2

## Fig.3A

| FREQUENCY | Public/prods liability | Client: Example Insurance Company Limited | | 07/31/98 |
|---|---|---|---|---|
| Year Incurred | Valn Month* | Claim Count | Cum Dev Factor* | Ult Claim Count |
| Dec-91 | 96 | 0 | 1.00 | 0 |
| Dec-92 | 84 | 0 | 1.00 | 0 |
| Dec-93 | 72 | 0 | 1.00 | 0 |
| Dec-94 | 60 | 129 | 0.97 | 125 |
| Dec-95 | 48 | 161 | 1.09 | 175 |
| Dec-96 | 36 | 161 | 1.24 | 199 |
| Dec-97 | 24 | 239 | 1.24 | 263 |
| Dec-98 | 12 | 213 | 1.24 | 263 |
| SEVERITY | | c | d | e |
| Year Incurred | Valn Month | Losses | Cum Dev Factor* | Trend Factor |
| Dec-91 | 96 | 0 | 1.00 | 135.54% |
| Dec-92 | 84 | 0 | 1.00 | 128.35% |
| Dec-93 | 72 | 0 | 1.03 | 120.29% |
| Dec-94 | 60 | 434,344 | 1.13 | 113.59% |
| Dec-95 | 48 | 444,616 | 1.25 | 109.54% |
| Dec-96 | 36 | 425,602 | 1.59 | 107.81% |
| Dec-97 | 24 | 748,823 | 1.59 | 105.18% |
| Dec-98 | 12 | 633,546 | 2.15 | 103.00% |

*(From inception)    Industry database used  Based on Retail Price Index

| Exposures | | | |
|---|---|---|---|
| Policy Year | Revenue | Trend Factor | Trended Revenue |
| Dec-91 | 8,033,825 | 135.54% | 10,889,076 |
| Dec-92 | 8,510,408 | 128.35% | 10,923,331 |

0

0

EP 0 978 795 A2

# Fig.3B

Development limiter
Severity:                        0.86  MAX                          1.59
                                 0.72  MIN                          0.14

Frequency:                       0.63  MAX                          1.24
                                 0.61  MIN                          0.02

| Ult Trended Losses |
| --- |
| 0 |
| 0 |
| 0 |
| 533,710 |
| 585,095 |
| 703,893 |
| 1,207,109 |
| 1,363,543 |

| NPV @ |
| --- |
| average paid each year as |
| 0.5 |
| 1.5 |
| 2.5 |
| 3.5 |
| 4.5 |
| 5.5 |
| 6.5 |
| 7.5 |

| RATES | | |
| --- | --- | --- |
| Freq per Exp | Loss per Exp | Ave Sev |
| 0.0000% | 0.00 | 0 |
| 0.0000% | 0.00 | 0 |

EP 0 978 795 A2

EP 0 978 795 A2

| | | | | |
|---|---|---|---|---|
| Dec-93 | 9,015,262 | 120.29% | 10,844,729 | 0 |
| Dec-94 | 9,662,661 | 113.59% | 10,975,924 | 5 |
| Dec-95 | 10,268,502 | 109.54% | 11,247,933 | 4 |
| Dec-96 | 10,663,034 | 107.81% | 11,496,158 | 3 |
| Dec-97 | 10,836,417 | 105.18% | 11,398,134 | 2 |
| Mar-98 | 11,114,274 | 103.00% | 11,447,702 | 1 |
| | 1,000 | Based on Retail Price Index | | AVERAGE |
| | | | | DATA YEARS |
| Freq X Sev Forecast | | | | TOTAL |
| Policy Year | Revenue | Freq per Exp | Forecast Claims | Ave Severity |
| Mar-99 | 11,447,702 | 0.0019% | 213.60 | 4,078 |
| Loss per Exposure Forecast | | | | |
| Policy Year | Revenue | Loss per Exp | Forecast Losses | |
| Mar-99 | 11,447,702 | 0.08 | 885,793 | |

| Forecast loss value over settlement profile | |
|---|---|
| 448,815 | 433,886 |
| 0 | 0 |
| 0 | 0 |
| 0 | 0 |
| 104,260 | 76,894 |
| 130,418 | 89,893 |
| 117,403 | 75,629 |
| 84,897 | 51,111 |
| | 727,412 |
| @ settlement pattern and fund interest rate | |
| | 7.00% |
| 885,793 | 82.12% |

*Fig.3C*

EP 0 978 795 A2

| | | |
|---|---|---|
| 0.0000% | 0.00 | 0 |
| 0.0011% | 0.05 | 4,266 |
| 0.0016% | 0.05 | 3,335 |
| 0.0017% | 0.06 | 3,531 |
| 0.0026% | 0.11 | 4,079 |
| 0.0023% | 0.12 | 5,180 |
| 0.0019% | 0.08 | 4,078 |
| 5 | 5 | 5 |
| 0.0093% | 0.39 | 20,391 |
| Forecast Losses | | |
| 871,096 | | |

| Forecast loss value over settlement profile | |
|---|---|
| 441,368 | 426,687 |
| 0 | 0 |
| 0 | 0 |
| 0 | 0 |
| 102,530 | 75,618 |
| 128,254 | 88,402 |
| 115,455 | 74,374 |
| 83,488 | 50,263 |
| | 715,343 |
| @ settlement pattern | |
| and fund interest rate | 7.00% |
| 871,096 | 82.12% |

*Fig.3D*

# Fig.4A

Mean + (standard deviation * T factor)

| T factor to the median of 75th and 95th percentile | 261,019 |
|---|---|

|  | years |  | Marine Deductible |
|---|---|---|---|
|  | 4 | 166,485 | 500 |
|  | 3 | 195,782 | 1,000 |
|  | 2 | 143,473 | 2,000 |
|  | 1 | 77,649 | 5,000 |
|  |  |  | 10,000 |
|  |  |  | 15,000 |
|  |  |  | 20,000 |
|  |  |  | 25,000 |
| total |  | 545,890 | 30,000 |
| mean average X large loss factor |  | 179,542 | 40,000 |
| maximum |  | 195,782 | 5,000 |
| minimum |  | 77,649 |  |
| standard deviation X large loss factor |  | 53,705 |  |
| **Years Data:** |  | 3 | standard deviation X: |

93.27%
Single large loss:
As factor of total:

EP 0 978 795 A2

## Fig.4B

EP 0 978 795 A2

|  | 187,489 |

| % of risk retained | agg stop | Fund |
|---|---|---|
| 19.25% | 50,256 | 36,099 |
| 31.87% | 83,175 | 59,744 |
| 45.99% | 120,035 | 86,221 |
| 69.01% | 180,141 | 129,394 |
| 84.61% | 220,850 | 158,635 |
| 92.04% | 240,246 | 172,567 |
| 95.46% | 249,169 | 178,977 |
| 97.18% | 253,648 | 182,194 |
| 98.31% | 256,597 | 184,312 |
| 100.00% | 261,019 | 187,489 |
| 69.01% | 180,141 | 129,394 |

0.4

37,500
1.07

## Fig.5

Client: Example Insurance Company Limited

| Severity 0 to: | 500 | 1,000 | 2,000 | 5,000 | 10,000 | 15,000 | 20,000 | 25,000 | 30,000 | 40,000 |
|---|---|---|---|---|---|---|---|---|---|---|
| Marine | 19.25% | 31.87% | 45.99% | 69.01% | 84.61% | 92.04% | 95.46% | 97.18% | 98.31% | 100.00% |
| Motor tp | 20.46% | 31.24% | 42.91% | 63.35% | 78.63% | 85.52% | 89.22% | 91.48% | 93.07% | 95.03% |
| Emp. Liability | 7.56% | 14.32% | 25.57% | 48.01% | 64.73% | 74.02% | 79.33% | 83.13% | 85.63% | 89.67% |
| Public/prods liability | 11.42% | 18.74% | 29.60% | 50.17% | 64.06% | 71.01% | 75.74% | 79.60% | 82.62% | 86.92% |
| Asset/interruption | 1.78% | 2.88% | 4.64% | 8.63% | 14.05% | 17.72% | 20.92 | 23.82% | 26.17% | 30.28% |

## Fig.6A

<center>( a )          ( b )          ( c )</center>

07/31/98

Client: Example Insurance Company Limited

| PROGRAMME DESIGN | | | |
|---|---|---|---|
| CLASS | Deductible | Aggregate Stop | Captive Retention |
| Motor | 2,000 | 1,250,000 | 698,987 |
| Motor tp | 5,000 | 1,500,000 | 1,031,968 |
| Selected reinsurer ratio: | 10,000 | 2,000,000 | 1,280,807 |
| 36.00% | 15,000 | 2,250,000 | 1,393,143 |
| | 20,000 | 2,250,000 | 1,453,353 |
| | 25,000 | 2,250,000 | 1,490,188 |
| | 30,000 | 2,250,000 | 1,516,066 |
| | 40,000 | 2,250,000 | 1,548,038 |
| Selected captive ratio: | 25,000 | 2,250,000 | 1,490,188 |
| 90.00% | 25,000 | 1,500,000 | 1,490,188 |
| | Current basis | | |

Reinsurers Catastrophe Reserve:

| Emp. Liability | 2,000 | 750,000 | 511,631 |
|---|---|---|---|
| Selected reinsurer ratio: | 5,000 | 1,500,000 | 960,742 |
| 36.00% | 10,000 | 1,750,000 | 1,295,257 |
| | 15,000 | 2,000,000 | 1,481,168 |
| | 20,000 | 2,250,000 | 1,587,426 |

EP 0 978 795 A2

## Fig.6B

(d)　　　　　　　　　(e)　　　　　　　　　(f)

| Captive Premium | Maximum Ceded Premium | Market Reinsurance Premium |
|---:|---:|---:|
| 776,652 | 2,004,084 | |
| 1,146,632 | 1,275,051 | |
| 1,423,119 | 742,917 | |
| 1,547,937 | 503,163 | |
| 1,614,836 | 374,693 | |
| 1,655,764 | 312,807 | 325,000 |
| 1,684,518 | 312,807 | |
| 1,720,043 | 312,807 | |
| 1,655,764 | 312,807 | 325,000 |
| 1,655,764 | 325,000 | |

25.00%

312,807

| 568,478 | 4,239,827 | |
|---:|---:|---:|
| 1,067,491 | 2,934,949 | |
| 1,439,175 | 1,989,375 | |
| 1,645,743 | 1,465,196 | |
| 1,763,807 | 1,165,692 | |

EP 0 978 795 A2

# Fig.6C

(g)             (h)             (i)

| % of risk retained by captive | Risk Cost | +/-% |
|---|---|---|
| 42.91% | 2,703,071 | 48.91% |
| 63.35% | 2,307,019 | 27.10% |
| 78.63% | 2,023,724 | 11.49% |
| 85.52% | 1,896,306 | 4.47% |
| 89.22% | 1,828,045 | 0.71% |
| 91.48% | 1,802,995 | -0.67% |
| 93.07% | 1,828,873 | 0.75% |
| 95.03% | 1,860,845 | 2.52% |
| 91.48% | 1,802,995 | -0.7% |
| 91.48% | 1,815,188 | 0.00% |

Annualised loss cost:    1,251,228

% to:    100.00%

| 25.57% | 4,751,457 | 99.31% |
|---|---|---|
| 48.01% | 3,895,691 | 63.41% |
| 64.73% | 3,284,632 | 37.78% |
| 74.02% | 2,946,364 | 23.59% |
| 79.33% | 2,753,118 | 15.49% |

Optimum

## Fig.6D

|  | | | |
|---|---|---|---|
|  | 25,000 | 2,250,000 | 1,663,469 |
|  | 30,000 | 2,250,000 | 17,133,530 |
| Selected captive ratio: | 40,000 | 2,250,000 | 1,794,371 |
| 90.00% | 50,000 | 2,750,000 | 1,858,943 |
|  | 50,000 | 2,000,000 | 1,858,943 |
| Current basis | | | |

Reinsurers Catastrophe Reserve:

| Public/prods liability | 2,000 | 500,000 | 238 |
|---|---|---|---|
| Selected reinsurer ratio: | 5,000 | 750,000 | 403,944 |
| 36.00% | 10,000 | 750,000 | 515,809 |
|  | 15,000 | 1,000,000 | 571,757 |
|  | 20,000 | 1,000,000 | 609,859 |
|  | 25,000 | 1,000,000 | 640,879 |
|  | 30,000 | 1,000,000 | 665,231 |
|  | 40,000 | 1,000,000 | 699,848 |
|  | 25,000 | 1,000,000 | 640,879 |
|  | 25,000 | 2,250,000 | 640,879 |
| Current basis | | | |

Reinsurers Catastrophe Reserve:

| Asset/interruption | 2,000 | 500,000 | 180,392 |
|---|---|---|---|
| Selected reinsurer ratio: | 5,000 | 750,000 | 335,897 |
| 36.00% | 10,000 | 1,000,000 | 546,686 |
|  | 15,000 | 1,250,000 | 689,487 |
|  | 20,000 | 1,500,000 | 813,727 |

EP 0 978 795 A2

## Fig.6E

| | | |
|---:|---:|---:|
| 1,848,299 | 951,363 | |
| 1,903,922 | 810,264 | |
| 1,993,745 | 582,412 | |
| 2,065,492 | 507,590 | 525,000 |
| 2,065,492 | 525,000 | |

25%

| | | |
|---:|---:|---:|
| 264,813 | 1,499,997 | |
| 448,827 | 1,052,279 | |
| 573,121 | 758,210 | |
| 635,286 | 611,550 | |
| 677,621 | 511,716 | |
| 712,087 | 430,441 | 325,000 |
| 739 | 366,635 | |
| 777,609 | 275,936 | |
| 712,087 | 430,441 | 325,000 |
| 712,087 | 375,000 | |

25%

| | | |
|---:|---:|---:|
| 200,436 | 377,541 | |
| 373,219 | 214,655 | |
| 607,429 | 106,515 | |
| 766,097 | 62,286 | |
| 904,141 | 62,286 | |

EP 0 978 795 A2

## Fig.6F

| | | |
|---|---|---|
| 83.13% | 2,614,832 | 9.69% |
| 85.63% | 2,523,794 | 5.87% |
| 89.67% | 2,376,783 | -0.30% |
| 92.67% | 2,366,533 | -0.73% |
| 92.90% | 2,383,943 | 0.00% |

Optimum

Projected* loss cost:     2,030,361

607,590

| | | |
|---|---|---|
| 29.06% | 1,738,329 | 71.12% |
| 50.17% | 1,456,223 | 43.35% |
| 64.06% | 1,274,019 | 25.41% |
| 71.01% | 1,183,308 | 16.48% |
| 75.74% | 1,121,575 | 10.40% |
| 79.60% | 1,071,320 | 5.46% |
| 82.62% | 1,031,867 | 1.57% |
| 86.92% | 975,784 | -3.95% |
| 79.60% | 1,071,320 | 5.5% |
| 79.60% | 1,015,879 | 0.00% |

Optimum

Projected* loss cost:     759,454

189,688

| | | |
|---|---|---|
| 4.64% | 7,583,277 | 35.43% |
| 8.63% | 7,365,258 | 31.54% |
| 14.05% | 7,153,204 | 2775.00% |
| 17.72% | 7,013,259 | 25.25% |
| 20.92% | 6,891,966 | 23.08% |

EP 0 978 795 A2

## Fig.6G

| | | |
|---:|---:|---:|
| 25,000 | 1,750,000 | 926,726 |
| 30,000 | 2,000,000 | 1,018,144 |
| 40,000 | 2,250,000 | 1,177,864 |
| 100,000 | 3,250,000 | 1,749,382 |
| 100,000 | 5,000,000 | 1,749,382 |
| Current basis | | |

*Reinsurers Catastrophe Reserve:*

| Marine | 2,000 | 250,000 | 86,221 |
|---|---:|---:|---:|
| Selected reinsurer ratio: | 5,000 | 250,000 | 129,394 |
| 36.00% | 10,000 | 250,000 | 158,635 |
| | 15,000 | 250,000 | 172,567 |
| | 20,000 | 250,000 | 178,977 |
| | 25,000 | 500,000 | 182,194 |
| | 30,000 | 500,000 | 184,312 |
| | 40,000 | 500,000 | 187,489 |
| | 5,000 | 250,000 | 129,394 |
| | 5,000 | 500,000 | 129,394 |
| Current basis | | |

*Reinsurers Catastrophe Reserve:*

| PROGRAMME | 2,000 | 2,750,000 | 1,715,562 |
|---|---:|---:|---:|
| Selected reinsurer ratio: | 5,000 | 4,750,000 | 2,861,946 |
| 36.00% | 10,000 | 6,000,000 | 3,797,195 |
| | 15,000 | 7,000,000 | 4,308,123 |
| | 20,000 | 7,500,000 | 4,643,341 |

EP 0 978 795 A2

## Fig.6H

| | | |
|---:|---:|---:|
| 1,029,695 | 62,286 | |
| 1,131,271 | 62,286 | |
| 1,308,738 | 62,286 | |
| 1,943,758 | 214,441 | 3,850,000 |
| 1,943,758 | 500,000 | |

25%

| | | |
|---:|---:|---:|
| 95,801 | 7,402,884 | |
| 143,771 | 7,029,361 | 500,000 |
| 176,261 | 6,606,518 | |
| 191,741 | 6,323,772 | |
| 198,863 | 6,078,239 | |
| 202,438 | 5,854,969 | |
| 204,791 | 5,674,341 | |
| 208,321 | 5,358,764 | |
| 143,771 | 4,229,547 | 500,000 |
| 143,771 | 3,850,000 | |

25%

| | |
|---:|---:|
| 1,906,180 | 15,524,333 |
| 3,179,940 | 12,506,295 |
| 4,219,106 | 10,203,535 |
| 4,788,804 | 8,965,967 |
| 5,159,268 | 8,192,626 |

EP 0 978 795 A2

## Fig.6I

| | | |
|---|---|---|
| 23.82% | 6,781,694 | 21.12% |
| 26.17% | 6,692,486 | 19.52% |
| 30.28% | 6,536,628 | 16.74% |
| 44.97% | 5,978,929 | 6.78% |
| 44.97% | 5,599,382 | 0.00% |

Optimum

Projected* loss cost:　　　　　　2,766,564

691,741

| | | |
|---|---|---|
| 45.99% | 463,762 | -26.32% |
| 69.01% | 344,049 | -45.34% |
| 84.61% | 265,151 | -57.87% |
| 92.04% | 234,853 | -62.69% |
| 95.46% | 241,263 | -61.67% |
| 97.18% | 244,480 | -61.16% |
| 98.31% | 246,598 | -60.82% |
| 100.00% | 249,775 | -60.32% |
| 69.01% | 343,835 | -45.4% |
| 69.01% | 629,394 | 0.00% |

Optimum

Annualised loss cost:　　　　　　249,142

| | | |
|---|---|---|
| 20.15% | 17,239,896 | 50.65% |
| 33.62% | 15,368,241 | 34.29% |
| 44.61% | 14,000,731 | 22.34% |
| 50.61% | 13,274,091 | 15.99% |
| 54.55% | 12,835,968 | 12.17% |

EP 0 978 795 A2

## Fig.6J

| | | |
|---|---|---|
| 25,000 | 7,750,000 | 4,903,455 |
| 30,000 | 8,000,000 | 5,097,284 |
| 40,000 | 8,500,000 | 5,407,611 |
| Current ret. | 8,750,000 | 5,868,786 |
| Blend | 9,500,000 | 5,970,928 |
| Current basis | 12,750,000 | 5,868,786 |

| Blend | Deductible | |
|---|---|---|
| Motor tp | 25,000 | 25,660 |
| Emp. Liability | 50,000 | 50,000 |
| Public/prods liability | 40,000 | 26,660 |
| Asset/interruption | 100,000 | 100,000 |
| Marine | 15,000 | 5,660 |
| +/-% | -4.06% | |

EP 0 978 795 A2

# Fig.6K

| | | |
|---|---|---|
| 5,448,284 | 7,611,865 | |
| 5,663,649 | 7,226,333 | |
| 6,008,456 | 6,592,204 | |
| 6,520,873 | 5,694,826 | |
| 6,634,365 | 5,068,619 | 5,575,000 |
| 6,520,873 | 5,575,000 | |

Annualised loss cost:

Premium @ selected loss ratio & nil retention:     19,603,192

Reinsurers Catastrophe Reserve:     1764287

| Modelling factors | |
|---|---|
| Project currency: | Sterling |
| Selected reinsurer ratio: | 86% |
| Selected captive ratio: | 90% |
| Current Programme ratio: | 35.97% |
| Discount Rate: | 5% |
| Fund factor: | 0.40 |
| Cross class aggregate: | no |
| Use trend factor: | no |
| Minimum severity: | 500 |
| Agg stop rounding: | 250,000 |

EP 0 978 795 A2

## Fig.6L

| | | | |
|---|---|---|---|
| 57.60% | 12,515,320 | 9.36% | |
| 59.88% | 12,323,618 | 7.69% | |
| 63.52% | 11,999,815 | 4.86% | |
| 68.94% | 11,563,612 | 1.05% | |
| 70.14% | 10,979,548 | -4.06% | Optimum |
| 68.94% | 11,443,786 | 0.00% | 36.00% |
| 7,057,149 | | | |

## Fig.6X

| Blend | Deductible | Current Deductible | Modelling Factors | |
|---|---|---|---|---|
| | | | Project currency: | Sterling |
| | | | Selected reinsurer ratio: | 30% |
| | | | Selected captive ratio: | 90% |
| | | | Current Programme ratio: | 35.97% |
| Motor tp | 25,000 | 25,000 | Discount Rate: | 5.00% |
| Emp. Liability | 50,000 | 50,000 | | |
| Public/prods liability | 40,000 | 25,000 | Fund factor: | 0.40 |
| Asset/interruption | 10,000 | 10,000 | | |
| Marine | 5,000 | 5,000 | Cross class aggregate: | no |
| +/-% | -4.00% | | Use trend factor: | no |
| | | | Minimum severity: | 500 |
| | | | Agg stop rounding: | 250,000 |

EP 0 978 795 A2

## Fig.7A

**Client: Example Insurance Company Limited**

| Per occurrence: | 2,000 | 5,000 | 10,000 | 15,000 | 20,000 | 25,000 |
|---|---|---|---|---|---|---|
| Ceded premium | 6,454,437 | 5,215,137 | 4,284,150 | 3,888,474 | 3,634,845 | 3,514,766 |
| Risk Cost | 8,498,867 | 8,630,648 | 8,841,346 | 9,076,376 | 9,244,909 | 9,456,857 |
| Agg Stop | 2,750,000 | 4,750,000 | 6,000,000 | 7,000,000 | 7,5000,000 | 7,750,000 |
| +/- % | -33.91% | -32.89% | -31.25% | -29.42% | -28.11% | -26.46% |
| ——×—— @ loss ratio | 85.00% | | | | | |

EP 0 978 795 A2

# Fig. 7B

| | 30,000 | 40,000 | Current ret. | Blend | Current basis |
|---|---|---|---|---|---|
| | 3,438,265 | 3,304,609 | 2,854,220 | 5,248,148 | 5,575,000 |
| | 9,629,822 | 9,898,994 | 10,138,853 | 8,449,828 | 12,859,633 |
| | 8,000,000 | 8,500,000 | 8,750,000 | 4,250,000 | 12,750,000 |
| | -25.12% | -23.02% | -21.16% | -34.29% | 0.00% |
| | | | | | |

| Blend | Deductible | | Modelling factors | |
|---|---|---|---|---|
| | | | Project currency: | |
| | | | Selected reinsurer ratio: | 85.00% |
| Motor tp | 2,000 | | Selected captive ratio: | 90.00% |
| Emp. Liability | 15,000 | | Current Programme ratio: | 35.66% |
| Public/prods liability | 2,000 | | Discount Rate: | 7.00% |
| Asset/interruption | 2,000 | | Fund factor: | 1.00 |
| Marine | 5,000 | | Cross class aggregate: | no |
| +/-% | -34.29% | | Use trend factor: | no |
| | | | Minimum severity: | 500 |
| | | | Agg stop rounding: | 250,000 |

Loss ratio

Discount rate

Fund factor

Minimum severity

*Fig.7C*

EP 0 978 795 A2